# EUROPÄISCHE PATENTANMELDUNG

(11) **EP 4 144 889 A1**
(43) Veröffentlichungstag der Anmeldung: **08.03.2023**
(21) Anmeldenummer: 21195065.4
(22) Anmeldetag: 06.09.2021
(51) Int. Cl.: C25B 3/07, C25B 3/20, C25B 3/25, C25B 9/13, C25B 9/19, C25B 9/21, C25B 13/07

(54) **VERFAHREN ZUR HERSTELLUNG VON ALKALIMETALLALKOHOLATEN IN EINER ELEKTROLYSEZELLE**

(71) Anmelder: Evonik Functional Solutions GmbH, 53859 Niederkassel (DE)
(72) Erfinder: REINSBERG, Philip Heinrich, 53359 Rheinbach (DE); HORN, Michael, 53859 Niederkassel (DE); TEUFERT, Rüdiger, 51143 Köln (DE); WEINER, Marc, 53840 Troisdorf (DE)
(74) Vertreter: Evonik Patent Association

(57) **Zusammenfassung**

Die vorliegende Erfindung betrifft ein Verfahren zur Herstellung einer Alkalimetallalkoholatlösung **L₁** in einer Elektrolysezelle E, die mindestens eine Kathodenkammer **K_{K}**, mindestens eine Anodenkammer **K_{A}** und gegebenenfalls eine dazwischen liegende Mittelkammer **K_{M}** umfasst.

Der Innenraum **I_{KK}** der Kathodenkammer **K_{K}** ist durch eine Trennwand W umfassend mindestens eine alkalikationenleitende Festelektrolytkeramik (= "AFK") F (z.B. NaSICON) vom Innenraum **I_{KA}** der Anodenkammer **K_{A}** bzw. in den Fällen, in denen die Elektrolysezelle E eine Mittelkammer **K_{M}** umfasst, vom Innenraum **I_{KM}** der Mittelkammer **K_{M}** abgetrennt. F hat die Oberfläche **O_{F}**, und ein Teil **O_{A/MK}** dieser Oberfläche **O_{F}** kontaktiert den Innenraum **I_{KM}** bzw. den Innenraum **I_{KA}** direkt, und ein Teil **O_{KK}** dieser Oberfläche **O_{F}** kontaktiert den Innenraum **I_{KK}** direkt.

Die Oberfläche **O_{A/MK}** und/oder die Oberfläche **O_{KK}** umfasst mindestens einen Teil einer Oberfläche **O_{FΔ}. O_{FΔ}** ergibt sich aus einem Vorbehandlungsschritt, in dem F aus einer AFK F' mit der Oberfläche **O_{F'}** hergestellt wird.

Im Vorbehandlungsschritt wird durch Sputtern der Oberfläche **O_{F'}** mit Edelgaskationen **N⁺** AFK von F' abgetragen, und die AFK F mit der Oberfläche **O_{F}** umfassend die durch das Sputtern ausgebildete Oberfläche **O_{pΔ}** erhalten.

Bei der Elektrolyse zur Herstellung der Alkalimetallalkoholate mit F anstatt von F' ergibt sich eine verbesserte Leitfähigkeit, wodurch bei konstanter Stromdichte eine geringere Spannung verwendet werden kann.

## Beschreibung

Die vorliegende Erfindung betrifft ein Verfahren zur Herstellung einer Alkalimetallalkoholatlösung **L₁** in einer Elektrolysezelle E, die mindestens eine Kathodenkammer **K_{K}**, mindestens eine Anodenkammer **K_{A}** und gegebenenfalls eine dazwischen liegende Mittelkammer **K_{M}** umfasst.

Der Innenraum **I_{KK}** der Kathodenkammer **K_{K}** ist durch eine Trennwand W umfassend mindestens eine alkalikationenleitende Festelektrolytkeramik (= "AFK") F (z.B. NaSICON) vom Innenraum **I_{KA}** der Anodenkammer **K_{A}** bzw. in den Fällen, in denen die Elektrolysezelle E eine Mittelkammer **K_{M}** umfasst, vom Innenraum **I_{KM}** der Mittelkammer **K_{M}** abgetrennt. F hat die Oberfläche **O_{F}**, und ein Teil **O_{A/MK}** dieser Oberfläche **O_{F}** kontaktiert den Innenraum **I_{KM}** bzw. den Innenraum **I_{KA}** direkt, und ein Teil **O_{KK}** dieser Oberfläche **O_{F}** kontaktiert den Innenraum **I_{KK}** direkt.

Die Oberfläche **O_{A/MK}** und/oder die Oberfläche **O_{KK}** umfasst mindestens einen Teil einer Oberfläche **O_{FΔ}**. **O_{FΔ}** ergibt sich aus einem Vorbehandlungsschritt, in dem F aus einer AFK F' mit der Oberfläche **O_{F'}** hergestellt wird.

Im Vorbehandlungsschritt wird durch Sputtern der Oberfläche **O_{F'}** mit Edelgaskationen **N⁺** AFK von F' abgetragen, und die AFK F mit der Oberfläche **O_{F}** umfassend die durch das Sputtern ausgebildete Oberfläche **O_{FΔ}** erhalten.

Bei der Elektrolyse zur Herstellung der Alkalimetallalkoholate mit **F** anstatt von **F'** ergibt sich eine verbesserte Leitfähigkeit, wodurch bei konstanter Stromdichte eine geringere Spannung verwendet werden kann.

### 1. Hintergrund der Erfindung

Die elektrochemische Herstellung von Alkalimetallalkoholatlösungen ist ein wichtiger industrieller Prozess, der beispielsweise in der DE 103 60 758 A1, der US 2006/0226022 A1 und der
WO 2005/059205 A1 beschrieben ist. Das Prinzip dieser Verfahren spiegelt sich in einer Elektrolysezelle wider, in deren Anodenkammer sich die Lösung eines Alkalisalzes, beispielsweise Kochsalz oder NaOH, und in deren Kathodenkammer sich der betreffende Alkohol oder eine niedrig konzentrierte alkoholische Lösung des betreffenden Alkalimetallalkoholates, beispielsweise Natriummethanolat oder Natriumethanolat, befinden. Die Kathodenkammer und die Anodenkammer sind durch eine das eingesetzte Alkalimetallion leitende Keramik getrennt, beispielsweise NaSICON oder ein Analogon für Kalium oder Lithium. Bei Anlegen eines Stroms entstehen an der Anode - wenn ein Chloridsalz des Alkalimetalls eingesetzt wird - Chlor und an der Kathode Wasserstoff und Alkoholationen. Der Ladungsausgleich erfolgt dadurch, dass Alkalimetallionen aus der Mittelkammer in die Kathodenkammer über die für sie selektive Keramik wandern. Der Ladungsausgleich zwischen Mittelkammer und Anodenkammer erfolgt durch die Wanderung von Kationen bei Einsatz von Kationenaustauschermembranen oder die Wanderung von Anionen bei Einsatz von Anionenaustauschermembranen oder durch Wanderung beider lonenarten bei Einsatz nichtspezifischer Diffusionsbarrieren. Dadurch erhöht sich die Konzentration des Alkalimetallalkoholats in der Kathodenkammer und es erniedrigt sich die Konzentration der Natriumionen im Anolyten.

NaSICON-Festelektrolyte werden auch bei der elektrochemischen Herstellung anderer Verbindungen eingesetzt:
WO 2014/008410 A1 beschreibt ein elektrolytisches Verfahren zur Herstellung von elementarem Titan oder Seltenen Erden. Dieses Verfahren beruht darauf, dass Titanchlorid aus TiO₂ und der entsprechenden Säure gebildet wird, dieses mit Natriumalkoholat zum Titaniumalkoholat und NaCl reagiert und schließlich elektrolytisch zu elementarem Titan und Natriumalkoholat umgesetzt wird.

WO 2007/082092 A2 und WO 2009/059315 A1 beschreiben Verfahren zur Herstellung von Biodiesel, in denen mithilfe von über NaSICON elektrolytisch hergestellten Alkoholaten zunächst Triglyceride in die entsprechenden Alkalimetalltriglyceride überführt werden und in einem zweiten Schritt mit elektrolytisch erzeugten Protonen zu Glycerin und dem jeweiligen Alkalimetallhydroxid umgesetzt werden.

Ein Nachteil der im Stand der Technik beschriebenen Elektrolysezellen besteht allerdings darin, dass der Widerstand der darin verwendeten Festelektrolytkeramiken relativ hoch ist. Dadurch erhöht sich der spezifische Energieverbrauch der elektrolytisch hergestellten Materialien, und es verschlechtern sich auch die energiespezifischen Daten (Strom, Spannung) der Zelle. Schließlich wird der gesamte Prozess ökonomisch unrentabel.

Die Aufgabe der vorliegenden Erfindung bestand demnach darin, ein Verfahren zur Herstellung einer Alkalimetallalkoholatlösung in einer Elektrolysezelle zur Verfügung zu stellen, das diesen Nachteil nicht aufweist.

Ein weiterer Nachteil herkömmlicher Elektrolysezellen auf diesem technischen Gebiet ergibt sich daraus, dass der Festelektrolyt nicht gegenüber wässrigen Säuren langzeitstabil ist. Dies ist insofern problematisch, als während der Elektrolyse in der Anodenkammer der pH durch Oxidationsprozesse sinkt (zum Beispiel bei Herstellung von Halogenen durch Disproportionierung oder durch Sauerstoffbildung). Diese sauren Bedingungen greifen den NaSICON-Festelektrolyten an, so dass das Verfahren nicht großtechnisch eingesetzt werden kann. Um diesem Problem zu begegnen, wurden im Stand der Technik verschiedene Ansätze beschrieben.

So wurden im Stand der Technik Dreikammerzellen vorgeschlagen. Solche sind auf dem Gebiet der Elektrodialyse bekannt, zum Beispiel US 6,221,225 B1.

WO 2012/048032 A2 und US 2010/0044242 A1 beschreiben beispielsweise elektrochemische Verfahren zur Herstellung von Natriumhypochlorit und ähnlichen Chlorverbindungen in einer solchen Dreikammerzelle. Die Kathodenkammer und die mittlere Kammer der Zelle werden dabei durch einen für Kationen durchlässigen Festelektrolyten wie zum Beispiel NaSICON getrennt. Um diesen vor dem sauren Anolyten zu schützen, wird der Mittelkammer beispielsweise Lösung aus der Kathodenkammer zugeführt. Die US 2010/0044242 A1 beschreibt außerdem in Abbildung 6, dass Lösung aus der mittleren Kammer mit Lösung aus der Anodenkammer außerhalb der Kammer vermischt werden kann, um Natriumhypochlorit zu erhalten.

Auch für die Herstellung oder Reinigung von Alkalimetallalkoholaten wurden solche Zellen im Stand der Technik vorgeschlagen.

So beschreibt die US 5,389,211 A ein Verfahren zur Reinigung von Alkoholatlösungen, in denen eine Dreikammerzelle eingesetzt wird, in welcher die Kammern durch kationenselektive Festelektrolyten oder auch nichtionische Trennwände voneinander abgegrenzt sind. Die Mittelkammer wird als Pufferkammer eingesetzt, um zu verhindern, dass sich die gereinigte Alkoxid- oder Hydroxidlösung aus der Kathodenkammer mit der verunreinigten Lösung aus der Anodenkammer mischt.

Die DE 42 33 191 A1 beschreibt die elektrolytische Gewinnung von Alkoholaten aus Salzen und Alkoholaten in Mehrkammerzellen und Stapeln aus mehreren Zellen.

Die WO 2008/076327 A1 beschreibt ein Verfahren zur Herstellung von Alkalimetallalkoholaten. Dabei wird eine Dreikammerzelle eingesetzt, deren Mittelkammer mit Akalimetallalkoholat gefüllt ist (siehe zum Beispiel Absätze [0008] und [0067] der WO 2008/076327 A1). Dadurch wird der die Mittelkammer und die Kathodenkammer abtrennende Festelektrolyt vor der in der Anodenkammer befindlichen Lösung, die bei der Elektrolyse saurer wird, geschützt. Eine ähnliche Anordnung beschreibt die WO 2009/073062 A1. Diese Anordnung hat allerdings den Nachteil, dass es sich bei der Alkalimetallalkoholatlösung, welche als Pufferlösung verbraucht und kontinuierlich kontaminiert wird, um das gewünschte Produkt handelt. Ein weiterer Nachteil des in der WO 2008/076327 A1 beschriebenen Verfahrens ist, dass die Bildung des Alkoholats in der Kathodenkammer von der Diffusionsgeschwindigkeit der Alkalimetallionen durch zwei Membranen bzw. Festelektrolyten abhängt. Dies führt wiederum zu einer Verlangsamung der Bildung des Alkoholats.

Ein weiteres Problem ergibt sich durch die Geometrie der Dreikammerzelle. Die Mittelkammer ist in einer solchen Kammer durch eine Diffusionsbarriere von der Anodenkammer und durch eine ionenleitende Keramik von der Kathodenkammer abgetrennt. Während der Elektrolyse kommt es damit unvermeidlich zur Ausbildung von pH-Gradienten und zu Totvolumina. Dies kann die ionenleitende Keramik schädigen und infolgedessen den Spannungsbedarf der Elektrolyse erhöhen und/oder zum Bruch der Keramik führen.

Während dieser Effekt in der gesamten Elektrolysekammer stattfindet, ist der Abfall des pH-Wertes besonders kritisch in der Mittelkammer, da diese von der ionenleitenden Keramik begrenzt wird. An der Anode und der Kathode werden üblicherweise Gase gebildet, sodass es in diesen Kammern zumindest bis zu einem gewissen Grad zur Durchmischung kommt. Eine solche Durchmischung findet dagegen in der Mittelkammer nicht statt, so dass sich in ihr der pH-Gradient ausbildet. Dieser unerwünschte Effekt verstärkt sich dadurch, dass die Sole im Allgemeinen relativ langsam durch die Elektrolysezelle gepumpt wird.

Eine weitere Aufgabe der vorliegenden Erfindung bestand deshalb darin, ein verbessertes Verfahren zur elektrolytischen Herstellung von Alkalimetallalkoholat zur Verfügung zu stellen. Dieses soll die vorgenannten Nachteile nicht aufweisen und insbesondere einen verbesserten Schutz des Festelektrolyten vor der Ausbildung des pH-Gradienten sowie einen gegenüber dem Stand der Technik sparsameren Einsatz der Edukte gewährleisten.

### 2. Kurzbeschreibung der Erfindung

Die erfindungsgemäßen Aufgaben werden durch das Verfahren nach Anspruch 1 gelöst.

### 3. Abbildungen

Die Abbildungen zeigen bevorzugte Ausführungsformen des erfindungsgemäßen Verfahrens.

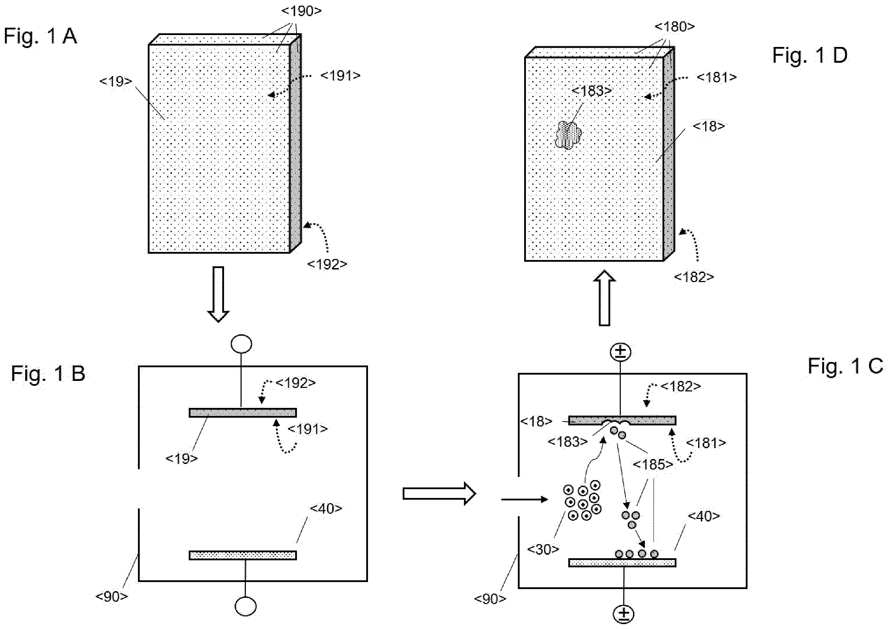

### 3.1 Abbildungen 1 A bis 1 D

Die Abbildungen 1 A (= "Fig. 1 A"), 1 B (= "Fig. 1 B"), 1 C (= "Fig. 1 C") und 1 D (= "Fig. 1 D") illustrieren die Schritte (i) und (ii) des erfindungsgemäßen Verfahrens.

Fig. 1A zeigt eine alkalikationenleitende Festelektrolytkeramik **F'** <19>, wie sie gemäß Schritt (i) bereitgestellt wird. Diese weist eine Oberfläche **O_{F'}** <190> auf. Die Oberfläche **O_{F'}** <190> umfasst beispielsweise zwei Teilbereiche, in Fig. 1A sind dies die mit den Bezugszeichen <191> und <192> bezeichneten gegenüberliegenden Flächen, von denen die hintere <192> verdeckt ist.

Die AFK **F'** <19> wird, wie in Fig 1B gezeigt, in einer Prozesskammer <90> als *"Target"* gegenüber einer Substratfolie <40> so angeordnet, dass der Oberflächenteilbereich <191> der Folie <40> gegenüberliegt, während der Oberflächenteilbereich <192> von ihr abgewandt ist. Die Substratfolie <40> ist optional, da das Sputtern des *Targets* auch ohne diese vorgenommen werden kann.

Fig. 1C zeigt den Schritt des Sputterns, bei der die HF *(high frequency;* auch *"radio frequency",* "*RF"*)-Variante angewandt wird. In der Prozesskammer <90> wird im Feinvakuum (10⁻¹ bis 10⁻² mbar) ein Plasma aus Argonkationen **N⁺** <30> und Elektronen erzeugt, und über eine Hochfrequenzspannungsquelle, die in Reihe mit einem Kondensator und dem Plasma geschaltet wird (nicht in Fig. 1C gezeigt), ein Wechselfeld (angedeutet durch das Symbol "±") mit einer negativen Offsetspannung am *Target,* der AFK F' <19>, erzeugt.

Die Argonionen **N⁺** <30> werden in Richtung des *Targets* AFK **F'** <19> beschleunigt und tragen von diesem AFK ab. Die so abgestäubten Teilchen <185> werden in Richtung des Substrats <40> gestreut und schlagen sich dort (und an den Wänden der Prozesskammer <90>) nieder.

Durch diesen Verfahrensschritt wird eine AFK **F** <18> erhalten, deren Oberfläche **O_{F}** <180> eine dem Substrat <40> zugewandten Teiloberfläche **O_{A/MK}** <181> und eine vom Substrat <40> abgewandte Teiloberfläche **O_{KK}** <182> umfasst. **O_{A/MK}** <181> umfasst wiederum einen Teilbereich **O_{FΔ}** <183>, der sich dadurch gebildet hat, dass mittels Sputtern AFK von F' <19> abgetragen wurde.

Fig. 1D zeigt die so erhaltene AFK **F** <18>, die nach Schritt (ii) erhalten wird. Diese weist eine Oberfläche **O_{F}** <180> auf. Die Oberfläche **O_{F}** <180> umfasst die beiden Teilbereiche **O_{A/MK}** <181> und **O_{KK}** <182>. F <18> entspricht **F'** <19> bzw. die Oberfläche **O_{F}** <180> entspricht der Oberfläche **O_{F'}** <190> mit dem Unterschied, dass **O_{A/MK}** <181> den Teilbereich **O_{FΔ}** <183> umfasst. Aufgrund dieses Teilbereichs **O_{FΔ}** <183> ist **S_{MF}**, das ist die massenbezogene spezifische Oberfläche **S_{M}** der AFK **F** <18>, größer als **S_{MF'}**, das ist die massenbezogene spezifische Oberfläche **S_{M}** der AFK **F'** <19>.

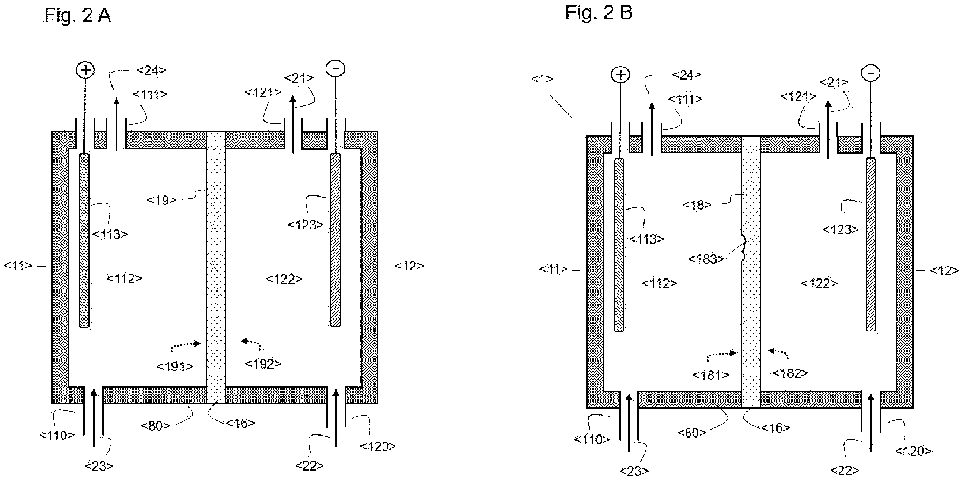

### 3.2 Abbildungen 2 A und 2 B

Die Abbildung 2A (= "Fig. 2 A") zeigt eine nicht erfindungsgemäße Ausführungsform anhand einer Elektrolysezelle **E**, bei der es sich um eine Zweikammerzelle handelt.

Die Elektrolysezelle **E** umfasst eine Kathodenkammer **K_{K}** <12> und eine Anodenkammer **K_{A}** <11>.

Die Anodenkammer **K_{A}** <11> umfasst eine anodische Elektrode **E_{A}** <113> im Innenraum **I_{KA}** <112>, einen Zulauf **Z_{KK}** <110> und einen Ablauf **A_{KA}** <111>.
Die Kathodenkammer **K_{K}** <12> umfasst eine kathodische Elektrode E_{K} <123> im Innenraum **I_{KK}** <122>, einen Zulauf **Z_{KK}** <120> und einen Ablauf **A_{KK}** <121>.

Die Elektrolysezelle **E** wird von einer Außenwand **W_{A}** <80> begrenzt.

Der Innenraum **I_{KK}** <122> ist außerdem durch eine Trennwand **W** <16>, die aus einer Scheibe einer für Natriumionen selektiv permeablen NaSICON-Festelektrolytkeramik **F'** <19> mit einer Oberfläche **O_{F'}** <190> besteht, vom Innenraum **I_{KA}** <112> abgetrennt. Die NaSICON-Festelektrolytkeramik **F'** <19> erstreckt sich über die gesamte Tiefe und Höhe der Zweikammerzelle **E**. Die NaSICON-Festelektrolytkeramik **F'** <19> kontaktiert die beiden Innenräume **I_{KK}** <122> und **I_{KA}** <112> direkt über die Teiloberflächen <192> bzw. <191>, so dass Natriumionen vom einen in den anderen Innenraum durch die NaSICON-Festelektrolytkeramik **F'** <19> geleitet werden können. In den Abbildungen 2 A und 2 B wird die jeweilige alkalikationenleitende Festelektrolytkeramik **F'** <19> bzw. **F** <18> so in der jeweiligen Elektrolysezelle angeordnet, dass die in Abbildungen 1 A bzw. 1 D angedunkelte Fläche in den Abbildungen 2 A und 2 B zum Betrachter gewandt ist.

Eine wässrige Lösung von Natriumchlorid **L₃** <23> mit pH 10.5 wird über den Zulauf **Z_{KA}** <110> entgegen der Schwerkraft in den Innenraum **I_{KA}** <112> gegeben.

Über den Zulauf **Z_{KK}** <120> wird eine Lösung von Natriummethanolat in Methanol **L₂** <22> in den Innenraum **I_{KK}** <122> geleitet.

Es wird dabei eine Spannung zwischen der kathodischen Elektrode **E_{K}** <123> und der anodischen Elektrode **E_{A}** <113> angelegt. Dadurch wird im Innenraum **I_{KK}** <122> Methanol im Elektrolyten **L₂** <22> zu Methanolat und **H₂** reduziert (CH₃OH + e⁻ → CH₃O⁻ + ½ H₂). Natriumionen diffundieren dabei vom Innenraum **I_{KA}** <112> durch den NaSICON-Festelektrolyten **F** <18> in den Innenraum **I_{KK}** <122>. Insgesamt erhöht sich dadurch die Konzentration von Natriummethanolat im Innenraum **I_{KK}** <122>, wodurch eine methanolische Lösung von Natriummethanolat **L₁** <21> erhalten wird, deren Konzentration an Natriummethanolat gegenüber **L₂** <22> erhöht ist.

Im Innenraum **I_{KA}** <112> findet die Oxidation von Chloridionen zu molekularem Chlor statt (Cl⁻ → ½ Cl₂ + e⁻). Am Ablauf **A_{KA}** <111> wird eine wässrige Lösung **L₄** <24> erhalten, in der der Gehalt an NaCl gegenüber **L₃** <23> verringert ist. Chlorgas Cl₂ bildet in Wasser gemäß der Reaktion Cl₂ + H₂O → HOCI + HCl hypochlorige Säure und Salzsäure, welche mit weiteren Wassermolekülen sauer reagieren. Die Acidität schädigt die NaSICON-Festelektrolytkeramik **F'** <19>.

Abbildung 2B (= "Fig. 2 B") zeigt eine Ausführungsform des erfindungsgemäßen Verfahrens. Die Elektrolysezelle **E** <1> entspricht der in Fig. 2A gezeigten Anordnung mit dem Unterschied, dass eine mit dem Verfahren entsprechend den Abbildungen 1 A bis 1 D vorbehandelte NaSICON-Festelektrolytkeramik **F** <18> mit der Oberfläche **O_{F}** <180> als Trennwand **W** <16> genutzt wird. **F** <18> weist eine den Innenraum **I_{KK}** <122> direkt kontaktierende Teiloberfläche **O_{KK}** <182> und eine den Innenraum **I_{KA}** <112> direkt kontaktierende Teiloberfläche **O_{A/MK}** <181> auf. Der NaSICON-Festelektrolyt **F** <18> wurde durch ein Sputterverfahren gemäß dem in Abbildungen 1 A bis 1 D erhalten. Die erhaltene NaSICON-Festelektrolytkeramik **F** <18> weist im Unterschied zu **F'** <19> den Teilbereich **O_{FΔ}** <183> auf, der sich durch das Sputterverfahren an der Teiloberfläche **O_{A/MK}** <181> ausgebildet hat. Dadurch hat die NaSICON-Festelektrolytkeramik **F** <18> eine größere massenbezogene spezifische Oberfläche **S_{MF}** als jene (**S_{MF'}**) der alkalikationenleitenden Festelektrolytkeramik **F'** <19>. Dies führt zu einer besseren Leitfähigkeit, das heißt zu einer Verminderung der Spannung bei gleicher Stromstärke während der Elektrolyse, was zu einer Energieeinsparung führt.

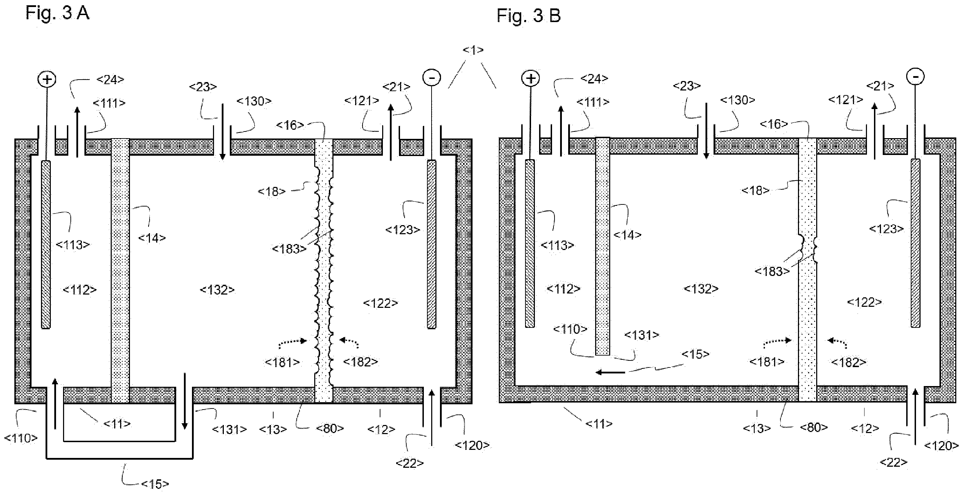

### 3.3 Abbildungen 3 A und 3 B

Die Abbildung 3A (= "Fig. 3 A") zeigt eine weitere Ausführungsformen des erfindungsgemäßen Verfahrens.

Sie zeigen das erfindungsgemäße Verfahren anhand einer Elektrolysezelle **E** <1>, bei der es sich um eine Dreikammerzelle handelt.

Die Dreikammerelektrolysezelle **E** <1> umfasst eine Kathodenkammer **K_{K}** <12>, eine Anodenkammer **K_{A}** <11> und eine dazwischen liegenden Mittelkammer **K_{M}** <13>.

Die Anodenkammer **K_{A}** <11> umfasst eine anodische Elektrode **E_{A}** <113> im Innenraum **I_{KA}** <112>, einen Zulauf **Z_{KK}** <110> und einen Ablauf **A_{KA}** <111>.
Die Kathodenkammer **K_{K}** <12> umfasst eine kathodische Elektrode **E_{K}** <123> im Innenraum **I_{KK}** <122>, einen Zulauf **Z_{KK}** <120> und einen Ablauf **A_{KK}** <121>.
Die Mittelkammer **K_{M}** <13> umfasst einen Innenraum **I_{KM}** <132>, einen Zulauf **Z_{KM}** <130> und einen Ablauf **A_{KM}** <131>. Der Innenraum **I_{KA}** <112> ist mit dem Innenraum **I_{KM}** <132> über die Verbindung **V_{AM}** <15> verbunden.

Die Elektrolysezelle **E** <1> wird von einer Außenwand **W**_{A} <80> begrenzt.

Der Innenraum **I_{KK}** <122> ist außerdem durch eine Trennwand **W** <16>, die aus einer Scheibe einer für Natriumionen selektiv permeablen NaSICON-Festelektrolytkeramik **F** <18> mit der Oberfläche **O_{F}** <180> besteht, vom Innenraum **I_{KM}** <132> abgetrennt. Diese weist eine den Innenraum **I_{KK}** <122> direkt kontaktierende Teiloberfläche **O_{KK}** <182> und eine den Innenraum **I_{KM}** <132> direkt kontaktierende Teiloberfläche **O_{A/MK}** <181> auf. Die NaSICON-Festelektrolytkeramik **F** <18> erstreckt sich über die gesamte Tiefe und Höhe der Dreikammerzelle **E** <1>. **F** <18> wird durch ein Sputterverfahren, welches dem in Abbildungen 1 A bis 1 D dargestellten Verfahren entspricht, aus dem NaSICON-Festelektrolyten **F'** <19> erhalten und weist im Unterschied zu **F'** <19> den Teilbereich **O_{FΔ}** <183> auf, der sich durch den Verfahrensschritt (ii) an der Teiloberfläche **O_{A/MK}** <181> ausgebildet hat. Im Unterschied zu der in Abbildung 2B gezeigten NaSICON-Festelektrolytkeramik **F** <18> ist die durch den Verfahrensschritt (ii) erhaltene Oberfläche **O_{FΔ}** <183> in der NaSICON-Festelektrolytkeramik **F** <18> gemäß Abbildung 3A größer. Zusätzlich wurde nicht nur die Teiloberfläche **O_{A/MK}** <181 >, sondern auch die Teiloberfläche **O_{KK}** <182> gesputtert, was die massenbezogene spezifische Oberfläche **S_{MF}** noch weiter erhöht. Diese ausgedehntere Bearbeitung wird durch großflächigeres Sputtern auf beiden Seiten von **F'** <19> erreicht.
Dadurch hat der NaSICON-Festelektrolyt **F** <18> eine noch größere massenbezogene spezifische Oberfläche **S_{MF}** als jene (**S_{MF'}**) der alkalikationenleitenden Festelektrolytkeramik **F'** <19>. Dies führt zu einer noch besseren Leitfähigkeit.

**F** <18> kontaktiert die beiden Innenräume **I_{KK}** <122> und **I_{KM}** <132> direkt, so dass Natriumionen vom einen in den anderen Innenraum durch die NaSICON-Festelektrolytkeramik **F** <18> geleitet werden können.

Der Innenraum **I_{KM}** <132> der Mittelkammer **K_{M}** <13> ist zusätzlich wiederum durch eine Diffusionsbarriere **D** <14> vom Innenraum **I_{KA}** <112> der Anodenkammer **K_{A}** <11> abgetrennt. Die NaSICON-Festelektrolytkeramik F <18> und die Diffusionsbarriere **D** <14> erstrecken sich über die gesamte Tiefe und Höhe der Dreikammerzelle **E** <1>. Die Diffusionsbarriere **D** <14> ist eine Kationenaustauschermembran (sulfoniertes PTFE).

In der Ausführungsform gemäß Abbildung 3A wird die Verbindung **V_{AM}** <15> außerhalb der Elektrolysezelle **E** <1> ausgebildet, insbesondere durch ein Rohr oder Schlauch, dessen Material aus Gummi, Metall oder Kunststoff ausgewählt sein kann. Durch die Verbindung **V_{AM}** <15> kann Flüssigkeit aus dem Innenraum **I_{KM}** <132> der Mittelkammer **K_{M}** <13> in den Innenraum **I_{KA}** <112> der Anodenkammer **K_{A}** <11> außerhalb der Dreikammerzelle **E** <1> geleitet werden. Die Verbindung **V_{AM}** <15> verbindet einen Ablauf **A_{KM}** <131>, der am Boden der Mittelkammer **K_{M}** <13> die Außenwand **W_{A}** <80> der Elektrolysezelle **E** <1> durchbricht, mit einem Zulauf **Z_{KA}** <110>, der am Boden der Anodenkammer **K_{A}** <11> die Außenwand **W**_{A} <80> der Elektrolysezelle **E** durchbricht.

Eine wässrige Lösung von Natriumchlorid **L₃** <23> mit pH 10.5 wird über den Zulauf Z_{KM} <130> gleichgerichtet mit der Schwerkraft in den Innenraum **I_{KM}** <132> der Mittelkammer **K_{M}** <13> gegeben. Durch die Verbindung **V_{AM}** <15>, die zwischen dem Ablauf **A_{KM}** <131> der Mittelkammer **K_{M}** <13> und einem Zulauf **Z_{KA}** <110> der Anodenkammer **K_{A}** <11> ausgebildet ist, ist der Innenraum **I_{KM}** <132> der Mittelkammer **K_{M}** <13> mit dem Innenraum **I_{KA}** <112> der Anodenkammer **K_{A}** <11> verbunden. Natriumchloridlösung **L₃** <23> wird durch diese Verbindung **V_{AM}** <15> vom Innenraum **I_{KM}** <132> in den Innenraum **I_{KA}** <112> geleitet.
Über den Zulauf **Z_{KK}** <120> wird eine Lösung von Natriummethanolat in Methanol **L₂** <22> in den Innenraum **I_{KK}** <122> geleitet.

Es wird dabei eine Spannung zwischen der kathodischen Elektrode **E_{K}** <123> und der anodischen Elektrode **E_{A}** <113> angelegt. Dadurch wird im Innenraum **I_{KK}** <122> Methanol im Elektrolyten **L₂** <22> zu Methanolat und H₂ reduziert (CH₃OH + e⁻ → CH₃O⁻ + ½ H₂). Natriumionen diffundieren dabei vom Innenraum **I_{KM}** <132> der Mittelkammer **K_{M}** <103> durch den NaSICON-Festelektrolyten F <18> in den Innenraum **I_{KK}** <122>. Insgesamt erhöht sich dadurch die Konzentration von Natriummethanolat im Innenraum **I_{KK}** <122>, wodurch eine methanolische Lösung von Natriummethanolat **L₁** <21> erhalten wird, deren Konzentration an Natriummethanolat gegenüber **L₂** <22> erhöht ist.

Im Innenraum **I_{KA}** <112> findet die Oxidation von Chloridionen zu molekularem Chlor statt (Cl⁻ → ½ Cl₂ + e⁻). Am Ablauf **A_{KA}** <111> wird eine wässrige Lösung **L₄** <24> erhalten, in der der Gehalt an NaCl gegenüber **L₃** <23> verringert ist. Chlorgas Cl₂ bildet in Wasser gemäß der Reaktion Cl₂ + H₂O → HOCI + HCl hypochlorige Säure und Salzsäure, welche mit weiteren Wassermolekülen sauer reagieren. Die Acidität würde den NaSICON-Festelektrolyten **F** <18> schädigen, wird aber durch die Anordnung in der Dreikammerzelle auf die Anodenkammer **K_{A}** <11> begrenzt und somit in der Elektrolysezelle **E** von der NaSICON-Festelektrolytkeramik **F** <18> ferngehalten. Dadurch erhöht sich deren Lebensdauer beträchtlich.

Die Abbildung 3B (= "Fig. 3 B") zeigt eine weitere Ausführungsform des erfindungsgemäßen Verfahrens. Dieses wird in einer Elektrolysezelle **E** <1> durchgeführt, welche der in Abbildung 3 A dargestellten Elektrolysezelle **E** <1> mit dem folgenden Unterschied entspricht:
Die Verbindung **V_{AM}** <15> vom Innenraum **I_{KM}** <132> der Mittelkammer **K_{M}** <13> zum Innenraum **I_{KA}** <112> der Anodenkammer **K_{A}** <11> wird nicht außerhalb, sondern, durch eine Perforation in der Diffusionsbarriere **D** <14>, innerhalb der Elektrolysezelle **E** <1> gebildet. Diese Perforation kann in die Diffusionsbarriere **D** <14> nachträglich (etwa durch Stanzen, Bohren) eingeführt werden oder schon aufgrund der Herstellung der Diffusionsbarriere **D** <14> von Vorneherein in dieser vorliegen (z.B. bei textilen Geweben wie Filtertüchern oder Metallgeweben).

Wie in der Ausführungsform gemäß Abbildung 3A ist nicht nur die Teiloberfläche **O_{A/MK}** <181>, sondern auch Teiloberfläche **O_{KK}** <182> gesputtert, was die massenbezogene spezifische Oberfläche **S_{MF}** noch weiter erhöht. **O_{FΔ}** <183> ist allerdings geringer als in der Ausführungsform gemäß Abbildung 3A.

### 4. Detaillierte Beschreibung der Erfindung

### 4.1 Schritt (i)

In Schritt (i) des erfindungsgemäßen Verfahrens wird eine alkalikationenleitende Festelektrolytkeramik (= "AFK") **F'** mit der Oberfläche **O_{F'}** bereitgestellt.

Die in Schritt (i) bereitgestellte AFK **F' wird** im erfindungsgemäßen Verfahren dem Schritt (ii) unterzogen, und im Anschluss an Schritt (ii) wird die AFK **F** mit der Oberfläche **O_{F}** erhalten. Da **F** im Wesentlichen dadurch aus **F'** erhalten wird, dass von **F'** in Schritt (ii) ein Teil AFK abgetragen wird, um zu **F** zu gelangen, haben **F'** und **F** im Wesentlichen die gleiche chemische Struktur.

Als alkalikationenleitende Festelektrolytkeramik **F'**, und insbesondere auch **F**, kommt jeder Festelektrolyt in Frage, durch welchen Kationen, insbesondere Alkalikationen, noch bevorzugter Natriumkationen, von **I_{AK}** in **I_{KK}** bzw. von **I_{MK}** in **I_{KK}** transportiert werden können. Solche Festelektrolyten sind dem Fachmann bekannt und beispielsweise in der DE 10 2015 013 155 A1, in der WO 2012/048032 A2, Absätze [0035], [0039], [0040], in der US 2010/0044242 A1, Absätze [0040], [0041], in der DE 10360758 A1, Absätze [014] bis [025] beschrieben. Sie werden kommerziell unter dem Namen NaSICON, LiSICON, KSICON vertrieben. Eine natriumionenleitende Festelektrolytkeramik **F'** ist bevorzugt, wobei dieser noch bevorzugter eine NaSICON-Struktur aufweist. Erfindungsgemäß einsetzbare NaSICON-Strukturen werden außerdem beispielsweise von N. Anantharamulu, K. Koteswara Rao, G. Rambabu, B. Vijaya Kumar, Velchuri Radha, M. Vithal, J Mater Sci 2011, 46, 2821-2837 beschrieben.

In einer bevorzugten Ausführungsform weist der alkalikationenleitende Festelektrolytkeramik F', und insbesondere auch **F**, eine NaSICON-Struktur der Formel

M^{I}_{1+2w+x-y+z} M^{II}_{w} M^{III}ₓ Zr^{IV}_{2-w-x-y} M^{V}_{y} (SiO₄)_{z} (PO₄)_{3-z}

auf.
M^{I} ist dabei ausgewählt aus Na⁺, Li⁺, bevorzugt Na⁺.
M^{II} ist dabei ein zweiwertiges Metallkation, bevorzugt ausgewählt aus Mg²⁺, Ca²⁺, Sr²⁺, Ba²⁺, Co²⁺, Ni²⁺, bevorzugter ausgewählt aus Co²⁺, Ni²⁺.
M^{III} ist dabei ein dreiwertiges Metallkation, bevorzugt ausgewählt aus Al³⁺, Ga³⁺, Sc³⁺, La³⁺, Y³⁺, Gd³⁺, Sm³⁺, Lu³⁺, Fe³⁺, Cr³⁺, bevorzugter ausgewählt aus Sc³⁺, La³⁺, Y³⁺, Gd³⁺, Sm³⁺, besonders bevorzugt ausgewählt aus Sc³⁺, Y³⁺, La³⁺.
M^{V} ist dabei ein fünfwertiges Metallkation, bevorzugt ausgewählt aus V⁵⁺, Nb⁵⁺, Ta⁵⁺.

Die römischen Indizes I, II, III, IV, V geben die Oxidationszahlen an, in der die jeweiligen Metallkationen vorliegen.
w, x, y, z sind reelle Zahlen, wobei gilt, dass 0 ≤x< 2, 0 ≤ y < 2, 0 ≤ w < 2, 0 ≤ z < 3,
und wobei w, x, y, z so gewählt werden, dass gilt 1 + 2w + x - y + z ≥ 0 und 2 - w - x - y ≥ 0.

Die NaSICON-Struktur hat dabei erfindungsgemäß noch bevorzugter eine Struktur der Formel Na₍₁₊ᵥ₎Zr₂SiᵥP₍₃₋ᵥ₎O₁₂, wobei v eine reelle Zahl ist, für die 0 ≤ v ≤ 3 gilt. Am bevorzugtesten gilt v = 2.4

In einer bevorzugten Ausführungsform des erfindungsgemäßen Verfahrens weisen die alkalikationenleitenden Festelektrolytkeramiken **F'** und **F** die gleiche Struktur auf.

### 4.2 Schritt (ii)

In Schritt (ii) des erfindungsgemäßen Verfahrens wird ein Teil der alkalikationenleitenden Festelektrolytkeramik **F'** durch Sputtern mit Edelgaskationen **N⁺,** bevorzugt Kationen des Argons, Neons, Kryptons, Xenons, noch bevorzugter Kationen des Argons, abgetragen.

Die Edelgaskationen **N⁺** liegen in Schritt (ii) insbesondere als Plasma vor.

Dadurch wird eine alkalikationenleitende Festelektrolytkeramik **F** mit der Oberfläche **O_{F}** erhalten, wobei sich die Oberfläche **O_{F}** in mindestens einem Teilbereich **O_{FΔ}** von der Oberfläche **O_{F'}** unterscheidet und wobei die Oberfläche **O_{F}** die Oberflächen **O_{A/MK}** und **O_{KK}** umfasst, wobei **O_{A/MK}** und/oder **O_{KK}** mindestens einen Teil von **O_{FΔ}** umfassen.

### 4.2.1 Sputtern

"Sputtern" ("Zerstäuben") ist eine dem Fachmann bekannte Methode zur Behandlung von Oberflächen, die beispielsweise von den folgenden Autoren beschrieben wird:
- Kapitel 7 ("Sputtern"; Seiten 147-190) des Buches "Oberflächentechnologie mit Niederdruckplasmen" von Gerhard Franz, 1994, Springer-Verlag Berlin Heidelberg;
- D. Horwat, J.F. Pierson, A. Billard, Surface & Coatings Technology 2007, 201, 7013 - 7017 und 7060 - 7065;
- V.A. Sugiawati, F. Vacandio, M. Eyraud, P. Knauth, T. Djenizian, Nanoscale Research Letters 2016, 11, 365;
- D. Depla, S. Mahieu, J.E. Greene, "Sputter Deposition Processes" (Seiten 253 - 296) in "Handbook of deposition technologies for films and coatings : science, applications and technology", (Ed. P.M. Martin), 3. Auflage, 2010, Oxford.

Im Allgemeinen wird beim Sputtern die Oberfläche eines bestimmten Körpers behandelt.

In Schritt (ii) wird durch das Sputtern mit Edelgaskationen **N⁺** AFK teilweises von **F'** abgetragen.

Die Bedingungen des Sputterns, insbesondere die Generierung des Plasmas der Edelgaskationen **N⁺,** die Anordnung der AFK **F'**, die Leistung, mit denen die Edelgaskationen **N⁺** auf die Oberfläche **O_{F'}** der AFK **F'** geschossen werden (d.h. ihre Energie), kann der Fachmann gemäß seinem Fachwissen einstellen.

Das Ausmaß, in dem AFK von **F'** abgetragen wird, kann ebenso von Fachmann über die Auswahl des Edelgases **N,** der Einstellung der Energie von **N⁺** und über die Zeit, die **F'** gesputtert wird, gesteuert werden.

Dazu wird **F'** bevorzugt in einer geeigneten Prozesskammer angeordnet.

In der Prozesskammer wird insbesondere ein hohes Vakuum (insbesondere 10⁻⁴ bis 10⁻¹, bevorzugt 10⁻² bis 10⁻¹ mbar) angelegt, ein Edelgas **N** eingeleitet und ein elektrisches Feld erzeugt, bei dem der zu behandelnde Körper (das *"Target"*) als ein Pol eingerichtet wird, beim *DC-Sputtering* beispielsweise als Kathode.

Das elektrische Feld kann dabei je nach Sputter-Variante ein Gleichstromfeld sein ("*DC*-Sputtern") oder ein Wechselstromfeld [*"High frequency* (*HF*)-Sputtern" oder *"Radio frequency (RF)*-Sputtern"] sein. Letzteres wird typischerweise durch Reihenschaltung einer Hochfrequenzspannungsquelle mit einem Kondensator und dem Plasma erzeugt. Optional kann das elektrische Feld auch mit einem Magnetfeld überlagert werden. Insbesondere bei *Targets* mit nicht ausreichender Leitfähigkeit wird bevorzugt im Wechselfeld gearbeitet, um das Aufladen des *Targets* zu verhindern.

Im Schritt (ii) des erfindungsgemäßen Verfahrens wird bevorzugt beim Sputtern ein Wechselfeld angelegt.

Durch das elektrische Feld wird ein Plasma von Edelgaskationen **N⁺** erzeugt, die in Richtung des Targets beschleunigt werden und dort Atome des *Targets* "herausschlagen", das heißt abtragen. Die Einstellung der dazu nötigen Energie der Edelgaskationen **N⁺** kann vom Fachmann gemäß seinem Fachwissen vorgenommen werden. Dabei weiß der Fachmann, welche Energie der Edelgaskationen **N⁺** er einstellen muss, damit diese zu einem möglichst hohen Anteil AFK an der Oberfläche **O_{F'}** abtragen und zu einem möglichst geringen Anteil unerwünschte Nebenreaktionen, wie zum Beispiel Einbau von **N⁺** in die Gitterstruktur von **F'**, verursachen.

In Schritt (ii) des erfindungsgemäßen Verfahrens weisen die Edelgaskationen **N⁺** bevorzugt eine Energie im Bereich von 1 bis 100 keV, bevorzugter im Bereich von 5 bis 70 keV, noch bevorzugter im Bereich von 10 bis 50 keV, noch bevorzugter im Bereich von 20 bis 40 keV auf. Die Energie kann vom Fachmann anhand seines Fachwissens (z.B. durch Einstellung der Stärke des Wechselfelds bzw. Gleichstromfelds in Abhängigkeit des jeweils verwendeten Edelgases **N**) eingestellt werden. In diesen Bereichen ist besonders gut gewährleistet, dass AFK durch Sputtern abgetragen wird und Nebeneffekte wie Einbau von **N⁺** in die Kristallstruktur der AFK unterbunden werden.

Die Dauer, über die die Oberfläche **O_{F'}** mit Edelgaskationen **N⁺** gesputtert wird, beträgt insbesondere > 1 min, bevorzugt mehr als 30 min, bevorzugt mehr als 60 min, noch mehr bevorzugter mehr als 120 min.

In Schritt (ii) des erfindungsgemäßen Verfahrens werden Edelgaskationen **N⁺** eingesetzt. Diese liegen bevorzugt als Plasma vor.

Bevorzugt wird dabei ein Plasma der Edelgaskationen **N⁺** in einem Wechselfeld erzeugt, das noch bevorzugter mit einem Magnetfeld überlagert wird.
Bevorzugt handelt es sich Edelgaskationen **N⁺,** bei denen das Edelgas **N** aus der Gruppe bestehend aus Helium, Neon, Argon, Krypton, Xenon, Radon, bevorzugter aus der Gruppe bestehend aus Neon, Argon, Krypton, Xenon, noch bevorzugter aus Argon, Krypton, Xenon ausgewählt ist. Am bevorzugtesten handelt es sich bei den Edelgaskationen **N⁺** um Argonkationen.

In einer optionalen Ausführungsform liegen die Edelgaskationen **N⁺** in Mischung mit einem reaktiven Gas, insbesondere ausgewählt aus Stickstoff, Sauerstoff, bevorzugt Stickstoff, vor. Dieses Gas erhöht die Abtragsrate des AFK von **F'**, da es mit den abgetragenen AFK-Partikeln reagieren kann.

In Schritt (ii) des erfindungsgemäßen Verfahrens liegt der Druck bevorzugt in einem Bereich von 10⁻⁴ bis 10⁻¹ mbar, bevorzugter im Bereich von 10⁻³ bis 10⁻¹ mbar, noch bevorzugter im Bereich von 10⁻² bis 10⁻¹ mbar.

Beim Sputtern gemäß Schritt (ii) kann die gesamte Oberfläche **O_{F'}** behandelt werden. Dies ist möglich, in dem zum Beispiel zunächst in einem ersten Unterschritt ein Teil der Oberfläche **O_{F'}** gesputtert wird, insbesondere dem Plasma und damit den Edelgaskationen **N⁺** zugewandt und durch diese gesputtert wird, und AFK an diesem Teil der Oberfläche **O_{F'}** abgetragen wird, und danach in einem zweiten Unterschritt die im ersten Unterschritt nicht vom Plasma erreichte Seite von **F'** gesputtert wird, insbesondere dem Plasma und damit den Edelgaskationen **N⁺** zugewandt und durch diese gesputtert wird und so dort AFK abgetragen wird.

Wenn die gesamte Oberfläche **O_{F'}** gemäß Schritt (ii) behandelt wird, unterscheidet sich die Oberfläche **O_{F}** des erhaltenen AFK F vollständig von **O_{F'}**, das heißt **O_{F}** und **O_{FΔ}** sind identisch.

Alternativ und bevorzugt kann in Schritt (ii) auch nur ein Teil der Oberfläche **O_{F'}** behandelt werden. Dies ist zum Beispiel möglich, in dem nur ein Teil der Oberfläche **O_{F'}** gesputtert wird, insbesondere dem Plasma und damit den Edelgaskationen **N⁺** zugewandt und durch diese gesputtert wird, und AFK nur an diesem Teil der Oberfläche **O_{F'}** abgetragen wird. Zusätzlich kann ein Teil der Oberfläche **O_{F'}** auch mit einer Schablone abgedeckt werden, so dass nur ein Teil der Oberfläche **O_{F'}** von den Edelgaskationen **N⁺** abgetragen wird. In diesem Fall wird ein AFK **F** erhalten, deren Oberfläche **O_{F}** noch teilweise mit der Oberfläche **O_{F'}** von **F'** identisch ist und sich im Teil **O_{FΔ}** von **O_{F'}** unterscheidet.

In der Ausführungsform der vorliegenden Erfindung, in der nur ein Teil der Oberfläche **O_{F'}** in Schritt (ii) behandelt wird und sich die Oberfläche **O_{F}** des erhaltenen AFK **F** nicht vollständig, sondern nur teilweise von **O_{F'}** unterscheidet, ist die Form von **O_{FΔ}**, solange **O_{FΔ}** nur mindestens teilweise von **O_{A/MK}** und/oder **O_{KK}** umfasst ist, nicht weiter begrenzt. Zum Beispiel kann **O_{FΔ}** einen zusammenhängenden Teilbereich auf der Oberfläche **O_{F}** ausbilden. Alternativ kann **O_{FΔ}** durch mehrere nicht miteinander verbundene Teilbereiche auf der Oberfläche **O_{F}** ausgebildet sein, so dass deren Form an die Form der schwarzen Tupfen (entspräche **O_{FΔ}**) auf dem weißen Fell (entspräche **O_{F}**) der Hunderasse "Dalmatiner" erinnert.

Es ist bevorzugt, dass die Oberfläche **O_{F'}** der AFK **F'** so in Schritt (ii) behandelt wird, dass die durch das Sputtern ausgebildete Fläche **O_{FΔ}** in der resultierenden AFK **F** mindestens einen der Oberflächenteile **O_{A/MK}** und **O_{KK}** umfasst, bevorzugt beide umfasst. Ganz besonders bevorzugt ist, dass der durch das Sputtern ausgebildete Teil **O_{FΔ}** der Oberfläche **O_{F}** mit mindestens einem der Teile **O_{A/MK}**, **O_{KK}** (**O_{FΔ}** = **O_{A/MK}** oder **O_{FΔ}** = **O_{KK}**) zusammenfällt. Noch bevorzugter fällt der durch das Sputtern ausgebildete Teil **O_{FΔ}** der Oberfläche **O_{F}** mit beiden Teilen **O_{A/MK}**, **O_{KK}** (**O_{FΔ}** = **O_{A/MK}** + **O_{KK}**) zusammen.

### 4.2.2 Zunahme der massenbezogenen spezifischen Oberfläche

Der überraschende Vorteil der vorliegenden Erfindung liegt darin, dass durch den Schritt (ii) eine AFK **F** erhalten wird, die gegenüber der in Schritt (ii) eingesetzten AFK **F'** beim Einsatz in der Elektrolysezelle **E** gemäß Schritt (iii) und Schritt (iv-a) bzw. (iv-β) eine höhere Leitfähigkeit aufweist.

Insbesondere gilt, dass **S**_{**MF**'} < **S_{MF}**, wobei **S**_{**MF**'} die massenbezogene spezifische Oberfläche **S_{M}** der alkalikationenleitenden Festelektrolytkeramik **F'** vor Durchführung des Schrittes (ii) ist und wobei **S_{MF}** die massenbezogene spezifische Oberfläche **S_{M}** der alkalikationenleitenden Festelektrolytkeramik **F** nach Durchführung des Schrittes (ii) ist. Das bedeutet, dass sich die massenbezogene spezifische Oberfläche **S_{M}** der dem Schritt (ii) unterworfenen AFK **F'** während der Durchführung des Schrittes (ii) von **S**_{**MF**'} zu **S**_{MF} in der erhaltenen AFK **F** vergrößert.

Die massenbezogene spezifische Oberfläche **S_{M}** meint die Oberfläche A, die ein Material pro Masse m aufweist. (**S_{M}** = A/m, Einheit m²/kg).

Der Vergleich der massebezogenen spezifischen Oberflächen **S**_{**MF**'} und **S_{MF}**, d.h. die Prüfung der Bedingung, ob **S**_{**MF**'} < **S_{MF}**, kann mit dem Fachmann bekannten Verfahren zur Messung der BET (Brunauer-Emmett-Teller)-Oberfläche bestimmt werden, wobei beide AFK **F** und **F'** unter den gleichen Bedingungen gemessen werden. Auch wenn das Verhältnis der beiden Parameter **S**_{**MF**'} und **S_{MF}** bei unterschiedlichen Messbedingungen bestimmt wird, wird das unter bestimmten Messbedingungen gemessene Verhältnis **S_{MF}**/ **S**_{**MF**'} im Wesentlichen gleich sein mit unter anderen Messbedingungen gemessene Verhältnis **S_{MF}**/ **S**_{**MF**'}.

Insbesondere werden im Rahmen der vorliegenden Erfindung die massenbezogenen spezifischen Oberflächen über BET-Messungen nach ISO 9277:2010 mit N₂ (Reinheit 99.99 vol.-%) als Adsorbens bei 77.35 K durchgeführt.
Gerät: Quantachrome NOVA 2200e, Quantachrome Instruments.
Probenvorbereitung: Entgasung der Probe bei 60 °C bei 1 Pa. Die Auswertung wird insbesondere über das statisch volumetrische Verfahren (gemäß Punkt 6.3.1 der Norm ISO 9277:2010) vorgenommen.

Für das Verhältnis **S**_{**MF**'} und **S_{MF}**, d.h. den Quotienten **S_{MF}**/ **S**_{**MF**'} gilt in einer bevorzugten Ausführungsform der vorliegenden Erfindung:
**S_{MF}**/ **S**_{**MF**'} ≥ 1.01, bevorzugt **S_{MF}**/ **S**_{**MF**'} ≥ 1.1, bevorzugt **S_{MF}**/ **S**_{**MF**'} ≥ 1.5, bevorzugt **S_{MF}**/ **S**_{**MF**'} ≥ 2.0, bevorzugt **S_{MF}**/ **S**_{**MF**'} ≥ 3.0, bevorzugt **S_{MF}**/ **S**_{**MF**'} ≥ 5.0, bevorzugt **S_{MF}**/ **S**_{**MF**'} ≥ 10, bevorzugter **S_{MF}**/ **S**_{**MF**'} ≥ 20, bevorzugter **S_{MF}**/ **S**_{**MF**'} ≥ 50, bevorzugter **S_{MF}**/ **S**_{**MF**'} ≥ 100, bevorzugter **S_{MF}**/ **S**_{**MF**'} ≥ 150, bevorzugter **S_{MF}**/ **S**_{**MF**'} ≥ 200, bevorzugter **S_{MF}**/ **S**_{**MF**'} ≥ 500, bevorzugter **S_{MF}**/ **S**_{**MF**'} ≥ 1000.

In einer anderen bevorzugten Ausführungsform der vorliegenden Erfindung gilt, dass der Quotient **S_{MF}**/ **S**_{**MF**'} im Bereich von 1.01 bis 1000, bevorzugt im Bereich von 1.1 bis 500, bevorzugter im Bereich von 1.5 bis 200, bevorzugter im Bereich von 2.0 bis 150, bevorzugter im Bereich von 3.0 bis 50, bevorzugter im Bereich von 5.0 bis 25, bevorzugter im Bereich von 15 bis 25, bevorzugter im Bereich von 18 bis 22, liegt.

### 4.3 Schritt (iii)

In Schritt (iii) des erfindungsgemäßen Verfahrens wird die in Schritt (ii) erhaltene AFK **F** in einer Elektrolysezelle **E** angeordnet.

### 4.3.1 Elektrolysezelle E

Die Elektrolysezelle **E** umfasst mindestens eine Anodenkammer **K_{A}** und mindestens eine Kathodenkammer **K_{K}** und gegebenenfalls mindestens eine dazwischen liegende Mittelkammer **K_{M}.** Dies umfasst auch Elektrolysezellen **E**, welche mehr als eine Anodenkammer **K_{A}** und/oder mehr als eine Kathodenkammer **K_{K}** und/oder mehr als eine Mittelkammer **K_{M}** aufweisen. Solche Elektrolysezellen, in denen diese Kammern modulartig aneinandergefügt werden, sind beispielsweise in der DD 258 143 A3 und der US 2006/0226022 A1 beschrieben.

Die Elektrolysezelle **B** umfasst in einer bevorzugten Ausführungsform der Erfindung eine Anodenkammer **K_{A}** und eine Kathodenkammer **K_{K}** und gegebenenfalls eine dazwischen liegende Mittelkammer **K_{M}**.

Die Elektrolysezelle **E** weist üblicherweise eine Außenwand **W**_{A} auf. Die Außenwand **W**_{A} ist insbesondere aus einem Material, welches aus der Gruppe bestehend aus Stahl, bevorzugt gummiertem Stahl, Kunststoff, der insbesondere aus Telene ^{®} (duroplastischem Polydicyclopentadien), PVC (Polyvinylchlorid), PVC-C (nachchloriertes Polyvinylchlorid), PVDF (Polyvinylidenfluorid) ausgewählt ist. **W_{A}** kann insbesondere für Zuläufe und Abläufe durchbrochen sein. Innerhalb von **W_{A}** liegen dann die mindestens eine Anodenkammer **K_{A}**, die mindestens eine Kathodenkammer **K_{K}** und in den Ausführungsformen, in denen die Elektrolysezelle **E** eine solche umfasst, die mindestens eine dazwischen liegende Mittelkammer **K_{M}**.

### 4.3.1.1 Kathodenkammer K_{K}

Die Kathodenkammer **K_{K}** weist mindestens einen Zulauf **Z_{KK}**, mindestens einen Ablauf **A_{KK}** und einen Innenraum **I_{KK}**, der eine kathodische Elektrode **E_{K}** umfasst, auf.

Der Innenraum **I_{KK}** der Kathodenkammer **K_{K}** ist durch die Trennwand **W** vom Innenraum **I_{KA}** der Anodenkammer **K_{A}** abgetrennt, falls die Elektrolysezelle **E** keine Mittelkammer **K_{M}** umfasst.

Die Trennwand **W** umfasst die alkalikationenleitende Festelektrolytkeramik **F**, und F kontaktiert dann den Innenraum **I_{KK}** über die Oberfläche **O_{KK}** und den Innenraum **I_{KA}** über die Oberfläche **O_{A/MK}** direkt.

Der Innenraum **I_{KK}** der Kathodenkammer **K_{K}** ist durch die Trennwand **W** vom Innenraum **I_{KM}** der Mittelkammer **K_{M}** abgetrennt, falls die Elektrolysezelle **E** mindestens eine Mittelkammer **K_{M}** umfasst.

Die Trennwand **W** umfasst die alkalikationenleitende Festelektrolytkeramik **F**, und **F** kontaktiert dann den Innenraum **I_{KK}** über die Oberfläche **O_{KK}** und den Innenraum **I_{KM}** über die Oberfläche **O_{A/MK}** direkt.

### 4.3.1.1.1 Trennwand W

Die Trennwand **W** umfasst die alkalikationenleitende Festelektrolytkeramik **F**. Das Merkmal "Trennwand" bedeutet, dass die Trennwand **W** flüssigkeitsdicht ist. Dies bedeutet insbesondere, dass die von der Trennwand umfasste alkalikationenleitende Festelektrolytkeramik **F** den Innenraum **I_{KK}** und den Innenraum **I_{KM}** bzw. den Innenraum **I_{KK}** und den Innenraum **I_{KA}** vollständig voneinander abtrennt, oder mehrere alkalikationenleitende Festelektrolytkeramiken umfasst, die z.B. lückenlos aneinander anschließen.

Jedenfalls existieren in der Trennwand **W** keine Lücken, durch welche wässrige Lösung, alkoholische Lösung, Alkohol oder Wasser von **I_{KK}** in **I_{AK}** bzw. von **I_{KK}** in **I_{MK}** oder umgekehrt fließen könnte.

"Direkt kontaktieren" bedeutet für die Anordnung der alkalikationenleitenden Festelektrolytkeramiken in der Trennwand **W** und in der Elektrolysezelle **E** sowie für die Oberflächen **O_{KK}** und **O_{A/MK}**, dass es einen gedachten Weg von der **I_{KK}** in **I_{AK}** bzw. von **I_{KK}** in **I_{MK}** gibt, der vollständig von **I_{KK}** über **O_{KK}** durch **F** zu **O_{A/MK}** und schließlich in **I_{AK}** bzw. **I_{MK}** führt.

Es ist bevorzugt, dass mindestens 1 % der Oberfläche **O_{A/MK}** von **O_{FΔ}** gebildet werden und/oder, insbesondere und, mindestens 1 % der Oberfläche **O_{KK}** von **O_{FΔ}** gebildet werden.

Noch bevorzugter werden mindestens 10 % der Oberfläche **O_{A/MK}** von **O_{FΔ}** gebildet und/oder, insbesondere und, mindestens 10 % der Oberfläche **O_{KK}** von **O_{FΔ}** gebildet.

Noch bevorzugter werden mindestens 25 % der Oberfläche **O_{A/MK}** von **O_{FΔ}** gebildet und/oder, insbesondere und, mindestens 25 % der Oberfläche **O_{KK}** von **O_{FΔ}** gebildet.

Noch bevorzugter werden mindestens 40 % der Oberfläche **O_{A/MK}** von **O_{FΔ}** gebildet und/oder, insbesondere und, mindestens 40 % der Oberfläche **O_{KK}** von **O_{FΔ}** gebildet.

Noch bevorzugter werden mindestens 50 % der Oberfläche **O_{A/MK}** von **O_{FΔ}** gebildet und/oder, insbesondere und, mindestens 50 % der Oberfläche **O_{KK}** von **O_{FΔ}** gebildet.

Noch bevorzugter werden mindestens 60 % der Oberfläche **O_{A/MK}** von **O_{FΔ}** gebildet und/oder, insbesondere und, mindestens 60 % der Oberfläche **O_{KK}** von **O_{FΔ}** gebildet.

Noch bevorzugter werden mindestens 70 % der Oberfläche **O_{A/MK}** von **O_{FΔ}** gebildet und/oder, insbesondere und, mindestens 70 % der Oberfläche **O_{KK}** von **O_{FΔ}** gebildet.

Noch bevorzugter werden mindestens 80 % der Oberfläche **O_{A/MK}** von **O_{FΔ}** gebildet und/oder, insbesondere und, mindestens 80 % der Oberfläche **O_{KK}** von **O_{FΔ}** gebildet.

Noch bevorzugter werden mindestens 90 % der Oberfläche **O_{A/MK}** von **O_{FΔ}** gebildet und/oder, insbesondere und, mindestens 90 % der Oberfläche **O_{KK}** von **O_{FΔ}** gebildet.

Noch bevorzugter werden 100 % der Oberfläche **O_{A/MK}** von **O_{FΔ}** gebildet und/oder, insbesondere und, 100 % der Oberfläche **O_{KK}** von **O_{FΔ}** gebildet.

Dies ist vorteilhaft, da dadurch die gesputterte Oberfläche von **F**, die am erfindungsgemäßen Verfahren [Schritte (iv-a) bzw. (iv-β)] teilnimmt, das heißt durch welche der Ionenfluss bei der Elektrolyse stattfindet, besonders groß ist.

### 4.3.1.1.2 Kathodische Elektrode E_{K}

Die Kathodenkammer **K_{K}** umfasst einen Innenraum **I_{KK}**, der wiederum eine kathodische Elektrode **E_{K}** umfasst. Als solche kathodische Elektrode **E_{K}** kommt jede dem Fachmann geläufige Elektrode in Frage, die unter den Bedingungen des erfindungsgemäßen Verfahrens stabil ist. Solche sind insbesondere in WO 2014/008410 A1, Absatz [025] oder DE 10360758 A1, Absatz [030] beschrieben. Diese Elektrode **E_{K}** kann aus der Gruppe bestehend aus Maschenwolle, dreidimensionale Matrixstruktur oder "Kugeln" ausgewählt sein. Die kathodische Elektrode **E_{K}** umfasst insbesondere ein Material, welches ausgewählt ist aus der Gruppe bestehend aus Stahl, Nickel, Kupfer, Platin, platinierte Metalle, Palladium, auf Kohle geträgertes Palladium, Titan. Bevorzugt umfasst **E_{K}** Nickel.

### 4.3.1.1.3 Zulauf Z_{KK} und Ablauf A_{KK}

Die Kathodenkammer **K_{K}** umfasst auch einen Zulauf **Z_{KK}** und einen Ablauf **A_{KK}**. Dies ermöglicht es, dem Innenraum **I_{KK}** der Kathodenkammer **K_{K}** Flüssigkeit, wie zum Beispiel die Lösung **L₂**, zuzufügen und darin befindliche Flüssigkeit, wie zum Beispiel die Lösung **L₁**, zu entfernen. Der Zulauf **Z_{KK}** und der Ablauf **A_{KK}** sind dabei so an der Kathodenkammer **K_{K}** angebracht, dass die Flüssigkeit beim Durchströmen des Innenraums **I_{KK}** der Kathodenkammer **K_{K}** die kathodische Elektrode **E_{K}** kontaktiert. Dies ist die Voraussetzung dafür, dass bei der Durchführung des erfindungsgemäßen Verfahrens am Ablauf **A_{KK}** die Lösung **L₁** erhalten wird, wenn die Lösung **L₂** eines Alkalialkoholats XOR im Alkohol ROH durch den Innenraum **I_{KK}** der Kathodenkammer **K_{K}** geleitet wird.

Der Zulauf **Z_{KK}** und der Ablauf **A_{KK}** können nach dem Fachmann bekannten Verfahren an der Elektrolysezelle **E** angebracht werden, z.B. durch Bohrungen in der Außenwand **W_{A}** und entsprechenden Anschlüssen (Ventilen), die die Ein- bzw. Ausleitung von Flüssigkeit vereinfachen.

### 4.3.1.2 Anodenkammer K_{A}

Die Anodenkammer **K_{A}** weist mindestens einen Zulauf **Z_{KA}**, mindestens einen Ablauf **A_{KA}** und einem Innenraum **I_{KA}**, der eine anodische Elektrode **E_{A}** umfasst, auf.

Der Innenraum **I_{KA}** der Anodenkammer **K_{A}** ist, falls die Elektrolysezelle **E** eine Mittelkammer **K_{M}** umfasst, durch eine Diffusionsbarriere **D** vom Innenraum **I_{KM}** der Mittelkammer **K_{M}** abgetrennt.

Falls die Elektrolysezelle **E** keine Mittelkammer **K_{M}** umfasst, ist der Innenraum **I_{KA}** der Anodenkammer **K** durch die Trennwand **W** vom Innenraum **I_{KK}** der Kathodenkammer **K_{K}** abgetrennt.

### 4.3.1.2.1 Anodische Elektrode E_{A}

Die Anodenkammer **K_{A}** umfasst einen Innenraum **I_{KA}**, der wiederum eine anodische Elektrode **E_{A}** umfasst. Als solche anodische Elektrode **E_{A}** kommt jede dem Fachmann geläufige Elektrode in Frage, die unter den Bedingungen des erfindungsgemäßen Verfahrens nach dem dritten Aspekt der Erfindung stabil ist. Solche sind insbesondere in WO 2014/008410 A1, Absatz [024] oder DE 10360758 A1, Absatz [031] beschrieben. Diese Elektrode **E_{A}** kann aus einer Schicht bestehen oder aus mehreren planen, zueinander parallelen Schichten bestehen, die jeweils perforiert oder expandiert sein können. Die anodische Elektrode **E_{A}** umfasst insbesondere ein Material, welches ausgewählt ist aus der Gruppe bestehend aus Rutheniumoxid, Iridiumoxid, Nickel, Kobalt, Nickelwolframat, Nickeltitanat, Edelmetalle wie insbesondere Platin, welches auf einem Träger wie Titan oder Kovar ^{®} (einer Eisen/Nickel/Kobalt-Legierung, in denen die einzelnen Anteile bevorzugt wie folgt sind: 54 Massen-% Eisen, 29 Massen-% Nickel, 17 Massen-% Cobalt) geträgert ist. Weitere mögliche Anodenmaterialien sind insbesondere Edelstahl, Blei, Graphit, Wolframcarbid, Titandiborid. Bevorzugt umfasst die anodische Elektrode **E_{A}** eine mit Rutheniumoxid/ Iridiumoxid beschichtete Titananode (RuO₂ + IrO₂ / Ti).

### 4.3.1.2.2 Zulauf Z_{KA} und Ablauf A_{KA}

Die Anodenkammer **K_{A}** umfasst auch einen Zulauf **Z_{KA}** und einen Ablauf **A_{KA}**. Dies ermöglicht es, dem Innenraum **I_{KA}** der Anodenkammer **K_{A}** Flüssigkeit, wie zum Beispiel die Lösung **L₃**, zuzufügen und darin befindliche Flüssigkeit, wie zum Beispiel die Lösung **L₄**, zu entfernen. Der Zulauf **Z_{KA}** und der Ablauf **A_{KA}** sind dabei so an der Anodenkammer **K_{A}** angebracht, dass die Flüssigkeit beim Durchströmen des Innenraums **I_{KA}** der Anodenkammer **K_{A}** die anodische Elektrode **E_{A}** kontaktiert. Dies ist die Voraussetzung dafür, dass bei der Durchführung des erfindungsgemäßen Verfahrens am Ablauf **A_{KA}** die Lösung **L₄** erhalten wird, wenn die Lösung **L₃** eines Salzes **S** durch den Innenraum **I_{KA}** der Anodenkammer **K_{A}** geleitet wird.

Der Zulauf **Z_{KA}** und der Ablauf **A_{KA}** können nach dem Fachmann bekannten Verfahren an der Elektrolysezelle **E** angebracht werden, z.B. durch Bohrungen in der Außenwand **W**_{A} und entsprechenden Anschlüssen (Ventilen), die die Ein- bzw. Ausleitung von Flüssigkeit vereinfachen. Der Zulauf **Z_{KA}** kann in bestimmten Ausführungsformen, in denen die Elektrolysezelle E eine Mittelkammer **K_{M}** umfasst, auch innerhalb der Elektrolysezelle liegen, beispielsweise als Perforation in der Diffusionsbarriere **D**.

### 4.3.1.3 Optionale Mittelkammer K_{M}

Die Elektrolysezelle **E** weist bevorzugt eine Mittelkammer **K_{M}** auf. Die optionale Mittelkammer **K_{M}** liegt zwischen Kathodenkammer **K_{K}** und Anodenkammer **K_{A}**.

Der Innenraum **I_{KA}** der Anodenkammer **K_{A}** ist, falls die Elektrolysezelle **E** eine Mittelkammer **K_{M}** umfasst, durch eine Diffusionsbarriere **D** vom Innenraum **I_{KM}** der Mittelkammer **K_{M}** abgetrennt. **A_{KM}** ist dann außerdem durch eine Verbindung **V_{AM}** mit dem Zulauf **Z_{KA}** verbunden, so dass durch die Verbindung **V_{AM}** Flüssigkeit aus **I_{KM}** in **I_{KA}** geleitet werden kann.

### 4.3.1.3.1 Diffusionsbarriere D

Der Innenraum **I_{KM}** der optionalen Mittelkammer **K_{M}** ist durch eine Diffusionsbarriere **D** vom Innenraum **I_{KA} der** Anodenkammer **K_{A}** abgetrennt und durch die Trennwand **W** vom Innenraum **I_{KK}** der Kathodenkammer **K_{K}** abgetrennt.

Für die Diffusionsbarriere **D** kann jedes Material genutzt werden, welches unter den Bedingungen des erfindungsgemäßen Verfahrens stabil ist und den Übergang von Protonen von der im Innenraum **I_{KA}** der Anodenkammer **K_{A}** befindlichen Flüssigkeit in Innenraum **I_{KM}** der optionalen Mittelkammer **K_{M}** verhindert oder verlangsamt.

Als Diffusionsbarriere **D** wird insbesondere eine nicht ionenspezifische Trennwand oder eine für spezifische Ionen durchlässige Membran verwendet. Bevorzugt handelt es sich bei der Diffusionsbarriere **D** um eine nicht ionenspezifische Trennwand.

Das Material der nicht ionenspezifischen Trennwand ist insbesondere aus der Gruppe bestehend aus Gewebe, wobei es sich insbesondere um textiles Gewebe oder Metallgewebe handelt, Glas, wobei es sich insbesondere um gesintertes Glas oder Glasfritten handelt, Keramik, insbesondere keramische Fritten, Membrandiaphragmas ausgewählt, und ist besonders bevorzugt ein textiles Gewebe oder Metallgewebe, besonders bevorzugt ein textiles Gewebe. Das textile Gewebe umfasst bevorzugt Kunststoff, bevorzugter einen Kunststoff ausgewählt aus PVC, PVC-C, Polyvinylether ("PVE"), Polytetrafluorethylen ("PTFE").

Handelt es sich bei der Diffusionsbarriere **D** um eine "für spezifische Ionen durchlässige Membran", so bedeutet dies erfindungsgemäß, dass die jeweilige Membran die Diffusion bestimmter Ionen durch sie hindurch gegenüber anderen Ionen begünstigt. Insbesondere sind damit Membranen gemeint, die die Diffusion durch sie hindurch von Ionen einer bestimmten Ladungsart gegenüber entgegengesetzt geladenen Ionen begünstigen. Noch bevorzugter begünstigen für spezifische Ionen durchlässige Membranen außerdem die Diffusion bestimmter Ionen mit einer Ladungsart gegenüber anderen Ionen derselben Ladungsart durch sie hindurch.

Ist die Diffusionsbarriere **D** eine "für spezifische Ionen durchlässige Membran", handelt es sich insbesondere bei der Diffusionsbarriere **D** um eine anionenleitende Membran oder um eine kationenleitende Membran.

Anionenleitende Membranen sind erfindungsgemäß solche, die selektiv Anionen, bevorzugt selektiv bestimmte Anionen leiten. In anderen Worten begünstigen sie die Diffusion von Anionen durch sie hindurch gegenüber der von Kationen, insbesondere gegenüber Protonen, noch bevorzugter begünstigen sie zusätzlich die Diffusion von bestimmten Anionen durch sie hindurch gegenüber der Diffusion anderer Anionen durch sie hindurch.

Kationenleitende Membranen sind erfindungsgemäß solche, die selektiv Kationen, bevorzugt selektiv bestimmte Kationen leiten. In anderen Worten begünstigen sie die Diffusion von Kationen durch sie hindurch gegenüber der von Anionen, noch bevorzugter begünstigen sie zusätzlich die Diffusion von bestimmten Kationen, durch sie hindurch gegenüber der Diffusion anderer Kationen durch sie hindurch, noch viel mehr bevorzugter von Kationen, bei denen es sich nicht um Protonen handelt, noch bevorzugter um Natriumkationen handelt, gegenüber Protonen.

"Begünstigen die Diffusion bestimmter Ionen X gegenüber der Diffusion anderer Ionen Y" bedeutet insbesondere, dass der Diffusionskoeffizient (Einheit m²/s) der Ionenart X bei einer gegebenen Temperatur für die betreffende Membran um den Faktor 10, bevorzugt 100, bevorzugt 1000 höher ist als der Diffusionskoeffizient der Ionenart Y für die betreffende Membran.

Handelt es sich bei der Diffusionsbarriere **D** um eine "für spezifische Ionen durchlässige Membran", so ist es bevorzugt eine anionenleitende Membran, denn diese verhindert besonders gut die Diffusion von Protonen aus der Anodenkammer **K_{A}** in die Mittelkammer **K_{M}**.

Als anionenleitende Membran wird insbesondere eine solche eingesetzt, die für die vom Salz **S** umfassten Anionen selektiv ist. Solche Membranen sind dem Fachmann bekannt und können von ihm eingesetzt werden.

Das Salz **S** ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Bevorzugt wird als anionenleitende Membran eine für Halogenide, bevorzugt Chlorid, selektive Membran eingesetzt.

Anionenleitende Membranen sind beispielsweise von M.A. Hickner, A.M. Herring, E.B. Coughlin, Journal of Polymer Science, Part B: Polymer Physics 2013, 51, 1727-1735, von C.G. Arges, V. Ramani, P.N. Pintauro, Electrochemical Society Interface 2010, 19, 31-35,
in WO 2007/048712 A2 sowie auf Seite 181 des Lehrbuchs von Volkmar M. Schmidt Elektrochemische Verfahrenstechnik: Grundlagen, Reaktionstechnik, Prozessoptimierung,
1. Auflage (8. Oktober 2003) beschrieben.

Noch bevorzugter werden demnach als anionenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, ausgewählt sind, eingesetzt, wobei diese kovalent gebunden funktionelle Gruppen ausgewählt aus -NH₃⁺, -NRH₂⁺, -NR₃⁺, =NR⁺;-PR₃⁺, wobei es sich bei R um Alkylgruppen mit bevorzugt 1 bis 20 Kohlenstoffatomen handelt, oder andere kationische Gruppen aufweisen. Bevorzugt weisen sie kovalent gebundene funktionelle Gruppen, ausgewählt aus -NH₃⁺, -NRH₂⁺, -NR₃⁺, bevorzugter ausgewählt aus -NH₃⁺, -NR₃⁺, noch bevorzugter -NR₃⁺, auf.

Wenn die Diffusionsbarriere **D** eine kationenleitende Membran ist, handelt es sich insbesondere um eine Membran, die für die vom Salz **S** umfassten Kationen selektiv ist. Noch bevorzugter ist die Diffusionsbarriere **D** eine alkalikationenleitende Membran, noch mehr bevorzugter eine kalium-und/oder natriumionenleitende Membran, am bevorzugtesten eine natriumionenleitende Membran. Kationenleitende Membranen sind beispielsweise beschrieben auf Seite 181 des Lehrbuchs von Volkmar M. Schmidt Elektrochemische Verfahrenstechnik: Grundlagen, Reaktionstechnik, Prozessoptimierung, 1. Auflage (8. Oktober 2003).

Noch bevorzugter werden demnach als kationenleitende Membran organische Polymere, welche insbesondere aus Polyethylen, Polybenzimidazolen, Polyetherketonen, Polystyrol, Polypropylen oder fluorierten Membranen wie Polyperfluorethylen, bevorzugt Polystyrol, Polyperfluorethylen, ausgewählt sind, eingesetzt, wobei diese kovalent gebunden funktionelle Gruppen ausgewählt aus -SO₃⁻, -COO⁻, -PO₃²⁻, -PO₂H⁻, bevorzugt -SO₃⁻, (beschrieben in DE 10 2010 062 804 A1, US 4,831,146) tragen.

Dies kann zum Beispiel ein sulfoniertes Polyperfluorethylen (Nafion ^{®} mit CAS-Nummer: 31175-20-9) sein. Diese sind dem Fachmann beispielsweise aus der WO 2008/076327 A1, Absatz [058], US 2010/0044242 A1, Absatz [0042] oder der US 2016/ 0204459 A1 bekannt und unter dem Handelsnamen Nafion ^{®}, Aciplex ^{®} F, Flemion ^{®}, Neosepta ^{®}, Ultrex ^{®}, PC-SK ^{®} erwerblich. Neosepta^{®}-Membranen sind beispielsweise beschrieben von S.A. Mareev, D.Yu. Butylskii, N.D. Pismenskaya, C. Larchet, L. Dammak, V.V. Nikonenko, Journal of Membrane Science 2018, 563, 768-776.

Wird eine kationenleitende Membran als Diffusionsbarriere D eingesetzt, kann dies beispielsweise ein mit Sulfonsäuregruppen funktionalisiertes Polymer, insbesondere der folgenden Formel **P**_{NAFION}, wobei n und m unabhängig voneinander eine ganze Zahl von 1 bis 10⁶, bevorzugter eine ganze Zahl von 10 bis 10⁵, noch bevorzugter eine ganze Zahl von 10² bis 10⁴ ist, sein.

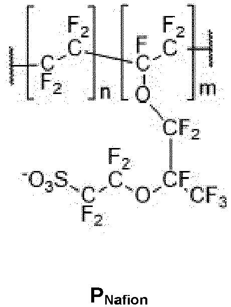

### 4.3.1.3.2 Zulauf Z_{KM} und Ablauf A_{KM}

Die optionale Mittelkammer **K_{M}** umfasst auch einen Zulauf **Z_{KM}** und einen Ablauf **A_{KM}**. Dies ermöglicht es, dem Innenraum **I_{KM}** der Mittelkammer **K_{M}** Flüssigkeit, wie zum Beispiel die Lösung **L₃**, zuzufügen, und darin befindliche Flüssigkeit, wie zum Beispiel die Lösung **L₃**, in die Anodenkammer **K_{A}** zu überführen.

Der Zulauf **Z_{KM}** und der Ablauf **A_{KM}** können nach dem Fachmann bekannten Verfahren an der Elektrolysezelle **E** angebracht werden, z.B. durch Bohrungen in der Außenwand **W_{A}** und entsprechenden Anschlüssen (Ventilen), die die Ein- bzw. Ausleitung von Flüssigkeit vereinfachen. Der Ablauf **A_{KM}** kann auch innerhalb der Elektrolysezelle liegen, beispielsweise als Perforation in der Diffusionsbarriere **D**.

### 4.3.1.3.3 Verbindung V_{AM}

In der Elektrolysezelle **E** ist der Ablauf **A_{KM}** durch eine Verbindung **V_{AM}** mit dem Zulauf **Z_{KA}** so verbunden, dass durch die Verbindung **V_{AM}** Flüssigkeit aus **I_{KM}** in **I_{KA}** geleitet werden kann,

Die Verbindung **V_{AM}** kann innerhalb der Elektrolysezelle **E** und/oder außerhalb der Elektrolysezelle **E** ausgebildet sein, und ist bevorzugt innerhalb der Elektrolysezelle ausgebildet.
1) Ist die Verbindung **V_{AM}** innerhalb der Elektrolysezelle **E** ausgebildet, wird sie bevorzugt durch mindestens eine Perforation in der Diffusionsbarriere **D** gebildet. Diese Ausführungsform ist insbesondere dann bevorzugt, wenn als Diffusionsbarriere **D** eine nicht ionenspezifische Trennwand, insbesondere ein Metallgewebe oder textiles Gewebe eingesetzt wird. Dieses fungiert als Diffusionsbarriere **D** und weist aufgrund der Webeigenschaften von vorneherein Perforationen und Lücken auf, die als Verbindung **V_{AM}** fungieren.
2) Die folgend beschriebene Ausführungsform ist insbesondere dann bevorzugt, wenn als Diffusionsbarriere **D** eine für spezifische Ionen durchlässige Membran eingesetzt wird: In dieser Ausführungsform ist die Verbindung **V_{AM}** außerhalb der Elektrolysezelle **E** ausgebildet, wobei sie bevorzugt durch eine außerhalb der Elektrolysezelle **E** verlaufende Verbindung von **A_{KM}** und **Z_{KA}** gebildet wird, insbesondere dadurch, dass vom Innenraum der Mittelkammer **I_{KM}** ein Ablauf **A_{KM}**, bevorzugt am Boden der Mittelkammer **K_{M}**, wobei noch bevorzugter der Zulauf **Z_{KM}** an der Oberseite **O_{EM}** der Mittelkammer **K_{M}** ist, gebildet wird, und ein Zulauf **Z_{KA}** in den Innenraum **I_{KA}** der Anodenkammer **K_{A}**, bevorzugt am Boden der Anodenkammer **K_{A}**, gebildet wird, und diese durch eine Leitung, beispielsweise ein Rohr oder ein Schlauch, der bevorzugt ein Material ausgewählt aus Gummi, Kunststoff umfasst, verbunden sind. Dies ist insbesondere deshalb vorteilhaft, da der Ablauf **A_{KA}** erfindungsgemäß an der Oberseite **O_{EA}** der Anodenkammer **K_{A}** ausgebildet.
   "Ablauf **A_{KM}** am Boden der Mittelkammer **K_{M}**" bedeutet insbesondere, dass der Ablauf **A_{KM}** so an der Elektrolysezelle **E** angebracht ist, dass die Lösung **L₃** die Mittelkammer **K_{M}** gleichgerichtet mit der Schwerkraft verlässt.
   "Zulauf **Z_{KA}** am Boden der Anodenkammer **K_{A}**" bedeutet insbesondere, dass der Zulauf **Z_{KA}** so an der Elektrolysezelle **E** angebracht ist, dass die Lösung **L₃** in die Anodenkammer **K_{A}** entgegen der Schwerkraft eintritt.
   "Zulauf **Z_{KM}** an der Oberseite **O_{EM}** der Mittelkammer **K_{M}**" bedeutet insbesondere, dass der Zulauf **Z_{KM}** so an der Elektrolysezelle **E** angebracht ist, dass die Lösung **L₃** in die Mittelkammer **K_{M}** gleichgerichtet mit der Schwerkraft eintritt.
   "Ablauf **A_{KA}** an der Oberseite **O_{EA}** der Anodenkammer **K_{A}**" bedeutet insbesondere, dass der Ablauf **A_{KA}** so an der Elektrolysezelle **E** angebracht ist, dass die Lösung **L₄** die Anodenkammer **K_{A}** entgegen der Schwerkraft verlässt.
   Diese Ausführungsform ist dabei besonders vorteilhaft und deshalb bevorzugt, wenn der Ablauf **A_{KM}** durch den Boden der Mittelkammer **K_{M}**, und der Zulauf **Z_{KA}** durch den Boden der Anodenkammer **K_{A}**, ausgebildet wird. Durch diese Anordnung ist es besonders einfach möglich, in der Anodenkammer **K_{A}** gebildete Gase mit **L₄** aus der Anodenkammer **K_{A}** abzuleiten, um diese dann weiter abzutrennen.
   Wenn die Verbindung **V_{AM}** außerhalb der Elektrolysezelle **E** ausgebildet ist, sind insbesondere **Z_{KM}** und **A_{KM}** an gegenüberliegenden Seiten der Außenwand **W_{A}** der Mittelkammer **K_{M}** angeordnet (also z.B. **Z_{KM}** am Boden und **A_{KM}** an der Oberseite **O_{EM}** der Elektrolysezelle **E** oder umgekehrt) und **Z_{KA}** und **A_{KA}** an gegenüberliegenden Seiten der Außenwand **W**_{A} der Anodenkammer **K_{A}** angeordnet (also **Z_{KA}** am Boden und **A_{KA}** an der Oberseite **O_{EA}** der Elektrolysezelle **E**), wie es insbesondere in Abbildung 3A gezeigt ist. Durch diese Geometrie muss **L₃** die beiden Kammern **K_{M}** und **K_{A}** durchströmen. Dabei können **Z_{KA}** und **Z_{KM}** an derselben Seite der Elektrolysezelle **E** ausgebildet sein, wobei dann automatisch auch **A_{KM}** und **A_{KA}** an derselben Seite der Elektrolysezelle **E** ausgebildet sind. Alternativ können **Z_{KA}** und **Z_{KM}** an gegenüberliegenden Seiten der Elektrolysezelle **E** ausgebildet sein, wobei dann automatisch auch **A_{KM}** und **A_{KA}** an gegenüberliegenden Seiten der Elektrolysezelle **E** ausgebildet sind.
3) Wenn die Verbindung **V_{AM}** innerhalb der Elektrolysezelle **E** ausgebildet ist, kann dies insbesondere dadurch gewährleistet werden, dass eine Seite ("Seite A") der Elektrolysezelle **E**, bei der es sich um die Oberseite **O_{E}** handelt, den Zulauf **Z_{KM}** und den Ablauf **A_{KA}** umfasst und die Diffusionsbarriere **D** ausgehend von dieser Seite ("Seite A") sich in die Elektrolysezelle **E** erstreckt, aber nicht ganz bis zur der der Seite A gegenüberliegenden Seite ("Seite B") der Elektrolysezelle **E**, bei der es dann sich um den Boden der Elektrolysezelle **E** handelt, reicht und dabei 50 % oder mehr der Höhe der Dreikammerzelle **E**, bevorzugter 60 % bis 99 % der Höhe der Dreikammerzelle **E**, noch bevorzugter 70 % bis 95 % der Höhe der Dreikammerzelle **E**, noch mehr bevorzugter 80 % bis 90 % der Höhe der Dreikammerzelle **E**, noch viel mehr bevorzugter 85 % der Höhe der Dreikammerzelle **E** durchspannt. Dadurch dass die Diffusionsbarriere **D** die Seite B der Dreikammerzelle **E** nicht berührt, entsteht so ein Spalt zwischen Diffusionsbarriere **D** und dem Behältnis **B_{E}** auf Seite B der Dreikammerzelle **E**. Der Spalt ist dann die Verbindung **V_{AM}**. Durch diese Geometrie muss **L₃** die beiden Kammern **K_{M}** und **K_{A}** vollständig durchströmen.

Diese Ausführungsformen gewährleisten am besten, dass am säureempfindlichen Festelektrolyten die wässrige Salzlösung **L₃** vorbeiströmt, bevor diese mit der anodischen Elektrode **E_{A}** in Kontakt kommt, wodurch es zur Bildung von Säuren kommt.

"Boden der Elektrolysezelle **E**" ist erfindungsgemäß die Seite der Elektrolysezelle **E**, durch die eine Lösung (z.B. **L₃** bei **A_{KM}** in Abbildung 3 A) gleichgerichtet mit der Schwerkraft aus der Elektrolysezelle **E** austritt bzw. die Seite der Elektrolysezelle **E**, durch die eine Lösung (z.B. L₂ bei **Z_{KK}** in Abbildungen 2 A, 3 A und 3 B und **L₃** bei **A_{KA}** in Abbildungen 2 A, 2 B und 3 A) der Elektrolysezelle **E** entgegen der Schwerkraft zugeführt wird.
"Oberseite **O_{E}** der Elektrolysezelle **E**" ist erfindungsgemäß die Seite der Elektrolysezelle **E**, durch die eine Lösung (z.B. **L₄** bei **A_{KA}** und **L₁** bei **A_{KK}** in allen Abbildungen) entgegen der Schwerkraft aus der Elektrolysezelle **E** austritt bzw. die Seite der Elektrolysezelle **E**, durch die eine Lösung (z.B. **L₃** bei **Z_{KM}** in Abbildungen 3 A und 3 B) der Elektrolysezelle **E** gleichgerichtet mit der Schwerkraft zugeführt wird.

### 4.3.1.4 Anordnung der Trennwand W in der Elektrolysezelle E

Die Trennwand **W** ist in der Elektrolysezelle **E** so angeordnet, dass die von der Trennwand **W** umfasste alkalikationenleitenden Festelektrolytkeramik **F** den Innenraum **I_{KK}** über die Oberfläche **O_{KK}** direkt kontaktiert.

Dies bedeutet, dass die Trennwand **W** in der Elektrolysezelle **E** so angeordnet ist, dass, wenn der Innenraum **I_{KK}** mit Lösung **L₂** vollständig gefüllt ist, dass die Lösung **L₂** die Oberfläche **O_{KK}** der von der Trennwand **W** umfassten alkalikationenleitenden Festelektrolytkeramik **F** kontaktiert (also benetzt), so dass Ionen (z.B. Alkalimetallionen wie Natrium, Lithium) aus der alkalikationenleitenden Festelektrolytkeramik **F**, die von der Trennwand **W** umfasst wird, über die Oberfläche **O_{KK}** in die Lösung **L₂** eintreten können.

Zusätzlich ist die Trennwand W in den Ausführungsformen, in denen die Elektrolysezelle E keine Mittelkammer **K_{M}** umfasst, so in der Elektrolysezelle **E** angeordnet, dass die von der Trennwand **W** umfasste alkalikationenleitende Festelektrolytkeramik **F** den Innenraum **I_{KA}** über die Oberfläche **O_{A/MK}** direkt kontaktiert.

Dies bedeutet Folgendes: in den Ausführungsformen, in denen die Elektrolysezelle **E** keine Mittelkammer **K_{M}** umfasst, grenzt die Trennwand **W** an den Innenraum **I_{KA}** der Anodenkammer **K_{A}**.

In diesen Ausführungsformen ist die Trennwand **W** in der Elektrolysezelle **E** so angeordnet, dass, wenn der Innenraum **I_{KA}** mit Lösung **L₃** vollständig gefüllt ist, die Lösung **L₃** dann die Oberfläche **O_{A/MK}** der von der Trennwand **W** umfassten alkalikationenleitenden Festelektrolytkeramik **F** kontaktiert (also benetzt), so dass Ionen (z.B. Alkalimetallionen wie Natrium, Lithium) aus der Lösung **L₃** in die alkalikationenleitende Festelektrolytkeramik **F**, die von der Trennwand **W** umfasst wird, über die Oberfläche **O_{A/MK}** eintreten können.

Zusätzlich ist die Trennwand **W** in den Fällen, in denen die Elektrolysezelle **E** mindestens eine Mittelkammer **K_{M}** umfasst, so in der Elektrolysezelle **E** angeordnet, dass die von der Trennwand **W** umfasste alkalikationenleitende Festelektrolytkeramik **F** den Innenraum **I_{KM}** über die Oberfläche **O_{A/MK}** direkt kontaktiert.

Dies bedeutet Folgendes: in den Ausführungsformen, in denen die Elektrolysezelle **E** mindestens eine Mittelkammer **K_{M}** umfasst, grenzt die Trennwand **W** an den Innenraum **I_{KM}** der Mittelkammer **K_{M}**.

In diesen Ausführungsformen ist die Trennwand **W** in der Elektrolysezelle **E** so angeordnet, dass, wenn der Innenraum **I_{KM}** mit Lösung **L₃** vollständig gefüllt ist, dass die Lösung **L₃** dann die Oberfläche **O_{A/MK}** der von der Trennwand **W** umfassten alkalikationenleitenden Festelektrolytkeramik **F** kontaktiert (also benetzt), so dass Ionen (z.B. Alkalimetallionen wie Natrium, Lithium) aus der Lösung **L₃** in die alkalikationenleitende Festelektrolytkeramik **F**, die von der Trennwand **W** umfasst wird, über die Oberfläche **O_{A/MK}** eintreten können.

### 4.4 Erfindungsgemäße Verfahrensschritte

Die vorliegende Erfindung betrifft in ein Verfahren zur Herstellung einer Lösung **L₁** eines Alkalimetallalkoholats XOR im Alkohol ROH, wobei X ein Alkalimetallkation ist und R ein Alkylrest mit 1 bis 4 Kohlenstoffatomen ist. Das Verfahren wird in einer Elektrolysezelle E durchgeführt.

Bevorzugt ist X aus der Gruppe bestehend aus Li⁺, K⁺, Na⁺, bevorzugter aus der Gruppe bestehend aus K⁺, Na⁺ ausgewählt. Am bevorzugtesten ist X = Na⁺.

R ist bevorzugt aus der Gruppe bestehend aus n-Propyl, *iso*-Propyl, Ethyl, Methyl ausgewählt, bevorzugter aus der Gruppe bestehend aus Ethyl, Methyl ausgewählt. Am bevorzugtesten ist R Methyl.

### 4.4.1 Verfahrensschritte in einer Elektrolysezelle E ohne Mittelkammer KM

In den Fällen, in denen die Elektrolysezelle **E** keine Mittelkammer **K_{M}** umfasst, werden die gleichzeitig ablaufenden Schritt (α1), (α2), (α3) durchgeführt.

### 4.4.1.1 Schritt (α1)

Im Schritt (α1) wird eine Lösung **L₂** umfassend den Alkohol ROH, bevorzugt umfassend ein Alkalialkoholat XOR und Alkohol ROH, durch **I_{KK}** geleitet. In den Fällen, in denen **O_{KK}** mindestens einen Teil von **O_{FΔ}** umfasst, kontaktiert die Lösung **L₂** die Oberfläche **O_{FΔ}** dabei direkt.
Insbesondere kontaktiert die Lösung **L₂** dann die gesamte von **O_{KK}** umfasste Oberfläche **O_{FΔ}** direkt.

Dies bedeutet, dass in den Fällen, in denen **O_{KK}** die ganze Oberfläche **O_{FΔ}** umfasst, **L₂** mindestens einen Teil der Oberfläche **O_{FΔ},** direkt kontaktiert, und in den Fällen, in denen **O_{KK}** nur einen Teil der Oberfläche **O_{FΔ}** umfasst, **L₂** mindestens einen Teil des von **O_{KK}** umfassten Teils der Oberfläche **O_{FΔ}** direkt kontaktiert.

Dies bedeutet bevorzugt, dass in den Fällen, in denen **O_{KK}** die ganze Oberfläche **O_{FΔ}** umfasst, **L₂** die ganze Oberfläche **O_{FΔ}** direkt kontaktiert, und in den Fällen, in denen **O_{KK}** nur einen Teil der Oberfläche **O_{FΔ}** umfasst, **L₂** den gesamten von **O_{KK}** umfassten Teil der Oberfläche **O_{FΔ}** direkt kontaktiert.

Die Lösung **L₂** ist bevorzugt frei von Wasser. "Frei von Wasser" bedeutet erfindungsgemäß, dass das Gewicht des Wassers in der Lösung **L₂** bezogen auf das Gewichts des Alkohols ROH in der Lösung **L₂** (Massenverhältnis) ≤ 1 : 10, bevorzugter ≤ 1 : 20, noch bevorzugter ≤ 1 : 100, noch bevorzugter ≤ 0.5 : 100 ist.

Umfasst die Lösung **L₂** XOR, so liegt der Massenanteil von XOR in der Lösung **L₂,** bezogen auf die gesamte Lösung **L₂,** insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung **L₂** XOR, so liegt in der Lösung **L₂** insbesondere das Massenverhältnis von XOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

### 4.2.1.2 Schritt (α2)

In Schritt (a2) wird eine neutrale oder alkalische, wässrige Lösung **L₃** eines Salzes S umfassend X als Kation durch **I_{KA}** geleitet. In den Fällen, in denen **O_{A/MK}** mindestens einen Teil von **O_{FΔ}** umfasst, kontaktiert die Lösung **L₃** die Oberfläche **O_{FΔ}** dabei direkt. Insbesondere kontaktiert die Lösung **L₃** dann die gesamte von **O_{A/MK}** umfasste Oberfläche **O_{FΔ}** direkt.

Dies bedeutet, dass in den Fällen, in denen **O_{A/MK}** die ganze Oberfläche **O_{FΔ}** umfasst, **L₃** mindestens einen Teil der Oberfläche **O_{FΔ},** direkt kontaktiert, und in den Fällen, in denen **O_{A/MK}** nur einen Teil der Oberfläche **O_{FΔ}** umfasst, **L₃** mindestens einen Teil des von **O_{A/MK}** umfassten Teils der Oberfläche **O_{FΔ}** direkt kontaktiert.

Dies bedeutet bevorzugt, dass in den Fällen, in denen **O_{A/MK}** die ganze Oberfläche **O_{FΔ}** umfasst, **L₃** die ganze Oberfläche **O_{FΔ}** direkt kontaktiert, und in den Fällen, in denen **O_{A/MK}** nur einen Teil der Oberfläche **O_{FΔ}** umfasst, **L₃** den gesamten von **O_{A/MK}** umfassten Teil der Oberfläche **O_{FΔ}** direkt kontaktiert.

Das Salz S ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Der pH der wässrigen Lösung **L₃** ist dabei ≥ 7.0, bevorzugt im Bereich 7 bis 12, bevorzugter im Bereich 8 bis 11, noch bevorzugter 10 bis 11, am bevorzugtesten bei 10.5.

Der Massenanteil des Salzes **S** in der Lösung **L₃** liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung **L₃.**

### 4.2.1.3 Schritt (a3)

Im Schritt (a3) wird dann eine Spannung zwischen **E_{A}** und **E_{K}** angelegt.

Dadurch kommt es zu einem Stromtransport von der Ladungsquelle zur Anode, zu einem Ladungstransport über Ionen zur Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies hat wiederum folgende Konsequenzen:
am Ablauf **A_{KK}** wird die Lösung **L₁** erhalten, wobei die Konzentration von XOR in **L₁** höher ist als in **L₂,**

am Ablauf **A_{KA}** wird eine wässrige Lösung **L₄** von **S** erhalten, wobei die Konzentration von **S** in **L₄** geringer ist als in **L₃**.

Im Schritt (a3) des Verfahrens wird insbesondere eine solche Spannung angelegt, dass so ein Strom fließt, so dass die Stromdichte (= Verhältnis des Stroms, der zur Elektrolysezelle fließt, zur Fläche des Festelektrolyten, die den im Innenraum **I_{KA}** befindlichen Anolyten kontaktiert) im Bereich von 10 bis 8000 A/ m² liegt, bevorzugter im Bereich von 100 bis 2000 A/ m² liegt, noch bevorzugter im Bereich von 300 bis 800 A/ m², noch bevorzugter bei 494 A/ m² liegt. Dies kann vom Fachmann standardmäßig bestimmt werden. Die Fläche des Festelektrolyten, die den im Innenraum **I_{KA}** befindlichen Anolyten kontaktiert beträgt insbesondere 0.00001 bis 10 m², bevorzugt 0.0001 bis 2.5 m², bevorzugter 0.0002 bis 0.15 m², noch bevorzugter 2.83 cm².

Es ist bevorzugt, dass sowohl **O_{A/MK}** als auch **O_{KK}** einen Teil der Oberfläche **O_{FΔ}** umfassen. Der Schritt (a3) des Verfahrens wird dann noch bevorzugter durchgeführt, wenn der Innenraum **I_{KA}** mindestens so weit mit **L₃** beladen ist und der Innenraum **I_{KK}** mit **L₂** mindestens so weit beladen ist, dass **L₃** und **L₂,** die von der Trennwand **W** umfasste Oberfläche **O_{FΔ}** der alkalikationenleitenden Festelektrolytkeramik F direkt kontaktieren. Dies ist bevorzugt, da dadurch die durch die Behandlung in Schritt (ii) erhaltene Oberfläche **O_{FΔ}** innerhalb beider Oberflächen **O_{A/MK}** und **O_{KK}** am Elektrolyseprozess teilnimmt und die vorteilhaften Eigenschaften der alkalikationenleitenden Festelektrolytkeramik **F,** die sich in einer Erhöhung der Leitfähigkeit und dadurch eine Zunahme der Stromstärke bei gleicher Spannung niederschlagen, besonders positiv auswirken.

Die Tatsache, dass in Schritt (a3) ein Ladungstransport zwischen **E_{A}** und **E_{K}** stattfindet, impliziert, dass **I_{KK}** und **I_{KA}** gleichzeitig mit **L₂** bzw. **L₃** so beladen sind, dass sie die Elektroden **E_{A}** und **E_{K}** soweit bedecken, dass der Stromkreislauf geschlossen ist.

Das ist insbesondere dann der Fall, wenn kontinuierlich ein Flüssigkeitsstrom von **L₃** durch **I_{KA}** und ein Flüssigkeitsstrom von **L₂** durch **I_{KK}** geleitet wird und der Flüssigkeitsstrom von **L₃** die Elektrode **E_{A}** und der Flüssigkeitsstrom von **L₂** die Elektrode **E_{K}** mindestens teilweise, bevorzugt vollständig bedeckt.

In einer weiteren bevorzugten Ausführungsform wird das Verfahren kontinuierlich durchgeführt, also Schritt (α1) und Schritt (a2) kontinuierlich durchgeführt und dabei gemäß Schritt (a3) Spannung angelegt.

Nach Durchführung des Schrittes (a3) wird am Ablauf **A_{KK}** die Lösung **L₁** erhalten, wobei die Konzentration von XOR in **L₁** höher ist als in **L₂.** Wenn **L₂** schon XOR umfasste, ist die Konzentration von XOR in **L₁** bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in **L₂,** am bevorzugtesten um das 1.077-fache höher als in **L₂,** wobei noch bevorzugter dabei der Massenanteil von XOR in **L₁** und in **L₂** im Bereich 10 bis 20 Gew.-%, noch mehr bevorzugter 13 bis 14 Gew.-% liegt.

Am Ablauf **A_{KA}** wird eine wässrige Lösung **L₄** von S erhalten, wobei die Konzentration von S in **L₄** geringer ist als in **L**₃.

Die Konzentration des Kations X in der wässrigen Lösung **L₃** liegt bevorzugt im Bereich 3.5 bis 5 mol/l, bevorzugter 4 mol/l. Die Konzentration des Kations X in der wässrigen Lösung **L₄** ist bevorzugter 0.5 mol/l geringer als jene der jeweils eingesetzten wässrigen Lösung **L₃.**

Insbesondere werden die Schritte (α1) bis (a3) des Verfahrens bei einer Temperatur von 20 °C bis 70 °C, bevorzugt 35 °C bis 65 °C, bevorzugter 35 °C bis 60 °C, noch bevorzugter 35 °C bis 50 °C und einem Druck von 0.5 bar bis 1.5 bar, bevorzugt 0.9 bar bis 1.1 bar, bevorzugter 1.0 bar durchgeführt.

Bei der Durchführung der Schritte (α1) bis (a3) des Verfahrens entsteht im Innenraum **I_{KK}** der Kathodenkammer **K_{K}** typischerweise Wasserstoff, der über den Ablauf **A_{KK}** aus der Zelle zusammen mit der Lösung **L₁** abgeführt werden kann. Die Mischung aus Wasserstoff und Lösung **L₁** kann dann in einer besonderen Ausführungsform der vorliegenden Erfindung nach dem Fachmann bekannten Verfahren aufgetrennt werden. Im Innenraum **I_{KA}** der Anodenkammer **K_{A},** wenn es sich bei der eingesetzten Alkalimetallverbindung um ein Halogenid, insbesondere Chlorid handelt, kann Chlor oder ein anderes Halogengas entstehen, welches über den Ablauf **A_{KK}** aus der Zelle zusammen mit der Lösung **L₄** abgeführt werden kann. Daneben kann auch Sauerstoff oder/und Kohlendioxid entstehen, was ebenso abgeführt werden kann. Die Mischung aus Chlor, Sauerstoff und/oder CO₂ und Lösung **L₄** kann dann in einer besonderen Ausführungsform der vorliegenden Erfindung nach dem Fachmann bekannten Verfahren aufgetrennt werden. Genauso kann dann nach Abtrennung der Gase Chlor, Sauerstoff und/oder CO₂ von der Lösung **L₄** diese nach dem Fachmann bekannten Verfahren voneinander abgetrennt werden.

### 4.4.2 Verfahrensschritte in einer Elektrolysezelle E mit Mittelkammer K_{M}

In den Fällen, in denen die Elektrolysezelle **E** mindestens eine Mittelkammer **K_{M}** umfasst, werden die gleichzeitig ablaufenden Schritte (β1), (β2), (β3) durchgeführt.

Es ist bevorzugt, dass die Elektrolysezelle **E** mindestens eine Mittelkammer **K_{M}** umfasst, und dann die gleichzeitig ablaufenden Schritte (β1), (β2), (β3) durchgeführt werden.

### 4.4.2.1 Schritt (β1)

Im Schritt (β1) wird eine Lösung **L₂** umfassend den Alkohol ROH, bevorzugt umfassend ein Alkalialkoholat XOR und Alkohol ROH, durch **I_{KK}** geleitet. In den Fällen, in denen **O_{KK}** mindestens einen Teil von **O_{FΔ}** umfasst, kontaktiert die Lösung **L₂** die Oberfläche **O_{FΔ}** dabei direkt.
Insbesondere kontaktiert die Lösung **L₂** dann die gesamte von **O_{KK}** umfasste Oberfläche **O_{FΔ}** direkt.

Dies bedeutet, dass in den Fällen, in denen **O_{KK}** die ganze Oberfläche **O_{FΔ}** umfasst, **L₂** mindestens einen Teil der Oberfläche **O_{FΔ},** direkt kontaktiert, und in den Fällen, in denen **O_{KK}** nur einen Teil der Oberfläche **O_{FΔ}** umfasst, **L₂** mindestens einen Teil des von **O_{KK}** umfassten Teils der Oberfläche **O_{FΔ}** direkt kontaktiert.

Dies bedeutet bevorzugt, dass in den Fällen, in denen **O_{KK}** die ganze Oberfläche **O_{FΔ}** umfasst, **L₂** die ganze Oberfläche **O_{FΔ}** direkt kontaktiert, und in den Fällen, in denen **O_{KK}** nur einen Teil der Oberfläche **O_{FΔ}** umfasst, **L₂** den gesamten von **O_{KK}** umfassten Teil der Oberfläche **O_{FΔ}** direkt kontaktiert.

Die Lösung **L₂** ist bevorzugt frei von Wasser. "Frei von Wasser" bedeutet erfindungsgemäß, dass das Gewicht des Wassers in der Lösung **L₂** bezogen auf das Gewichts des Alkohols ROH in der Lösung **L₂** (Massenverhältnis) ≤ 1 : 10, bevorzugter ≤ 1 : 20, noch bevorzugter ≤ 1 : 100, noch bevorzugter ≤ 0.5 : 100 ist.

Umfasst die Lösung **L₂** XOR, so liegt der Massenanteil von XOR in der Lösung **L₂,** bezogen auf die gesamte Lösung **L₂,** insbesondere bei > 0 bis 30 Gew.-%, bevorzugt bei 5 bis 20 Gew.-%, noch bevorzugter bei 10 bis 20 Gew.-%, noch bevorzugter bei 10 bis 15 Gew.-%, am bevorzugtesten bei 13 bis 14 Gew.-%, am allerbevorzugtesten bei 13 Gew.-%.

Umfasst die Lösung **L₂** XOR, so liegt in der Lösung **L₂** insbesondere das Massenverhältnis von XOR zu Alkohol ROH im Bereich 1 : 100 bis 1 : 5, bevorzugter im Bereich 1 : 25 bis 3 : 20, noch bevorzugter im Bereich 1 : 12 bis 1 : 8, noch bevorzugter bei 1 : 10.

### 4.4.2.2 Schritt (β2)

In Schritt (β2) wird eine neutrale oder alkalische, wässrige Lösung **L₃** eines Salzes **S** umfassend X als Kation durch **I_{KM},** dann über **V_{AM}**, dann durch **I_{KA}** geleitet. In den Fällen, in denen **O_{A/MK}** mindestens einen Teil von **O_{FΔ}** umfasst, kontaktiert die Lösung **L₃** die Oberfläche **O_{FΔ}** dabei direkt. Insbesondere kontaktiert die Lösung **L₃** dann die gesamte von **O_{A/MK}** umfasste Oberfläche **O_{FΔ}** direkt.

Dies bedeutet, dass in den Fällen, in denen **O_{A/MK}** die ganze Oberfläche **O_{FΔ}** umfasst, **L₃** mindestens einen Teil der Oberfläche **O_{FΔ},** direkt kontaktiert, und in den Fällen, in denen **O_{A/MK}** nur einen Teil der Oberfläche **O_{FΔ}** umfasst, **L₃** mindestens einen Teil des von **O_{A/MK}** umfassten Teils der Oberfläche **O_{FΔ}** direkt kontaktiert.

Dies bedeutet bevorzugt, dass in den Fällen, in denen **O_{A/MK}** die ganze Oberfläche **O_{FΔ}** umfasst, **L₃** die ganze Oberfläche **O_{FΔ}** direkt kontaktiert, und in den Fällen, in denen **O_{A/MK}** nur einen Teil der Oberfläche **O_{FΔ}** umfasst, **L₃** den gesamten von **O_{A/MK}** umfassten Teil der Oberfläche **O_{FΔ}** direkt kontaktiert.

Das Salz S ist bevorzugt ein Halogenid, Sulfat, Sulfit, Nitrat, Hydrogencarbonat oder Carbonat von X, noch bevorzugter ein Halogenid.

Halogenide sind Fluoride, Chloride, Bromide, Jodide. Das bevorzugteste Halogenid ist Chlorid.

Der pH der wässrigen Lösung **L₃** ist dabei ≥ 7.0, bevorzugt im Bereich 7 bis 12, bevorzugter im Bereich 8 bis 11, noch bevorzugter 10 bis 11, am bevorzugtesten bei 10.5.

Der Massenanteil des Salzes **S** in der Lösung **L₃** liegt dabei bevorzugt im Bereich > 0 bis 20 Gew.-%, bevorzugt 1 bis 20 Gew.-%, bevorzugter bei 5 bis 20 Gew.-%, noch bevorzugter bei 10 bis 20 Gew.-%, am bevorzugtesten bei 20 Gew.-%, bezogen auf die gesamte Lösung **L₃.**

### 4.4.2.3 Schritt (β3)

Im Schritt (β3) wird dann eine Spannung zwischen **E_{A}** und **E_{K}** angelegt.

Dadurch kommt es zu einem Stromtransport von der Ladungsquelle zur Anode, zu einem Ladungstransport über Ionen zur Kathode und schließlich zu einem Stromtransport zurück zur Ladungsquelle. Die Ladungsquelle ist dem Fachmann bekannt und ist typischerweise ein Gleichrichter, der Wechselstrom in Gleichstrom umwandelt und über Spannungsumwandler bestimmte Spannungen erzeugen kann.

Dies hat wiederum folgende Konsequenzen:
am Ablauf **A_{KK}** wird die Lösung **L₁** erhalten, wobei die Konzentration von XOR in **L₁** höher ist als in **L₂,**
am Ablauf **A_{KA}** wird eine wässrige Lösung **L₄** von **S** erhalten, wobei die Konzentration von **S** in **L₄** geringer ist als in **L**₃.

Im Schritt (β3) des Verfahrens wird insbesondere eine solche Spannung angelegt, dass so ein Strom fließt, so dass die Stromdichte (= Verhältnis des Stroms, der zur Elektrolysezelle fließt, zur Fläche des Festelektrolyten, die den im Innenraum **I_{KM}** befindlichen Anolyten kontaktiert) im Bereich von 10 bis 8000 A/ m² liegt, bevorzugter im Bereich von 100 bis 2000 A/ m² liegt, noch bevorzugter im Bereich von 300 bis 800 A/ m², noch bevorzugter bei 494 A/ m² liegt. Dies kann vom Fachmann standardmäßig bestimmt werden. Die Fläche des Festelektrolyten, die den im Innenraum **I_{KM}** der Mittelkammer **K**_{M} befindlichen Anolyten kontaktiert beträgt insbesondere 0.00001 bis 10 m², bevorzugt 0.0001 bis 2.5 m², bevorzugter 0.0002 bis 0.15 m², noch bevorzugter 2.83 cm².

Es ist bevorzugt, dass sowohl **O_{A/MK}** als auch **O_{KK}** einen Teil der Oberfläche **O_{FΔ}** umfassen. Der Schritt (β3) des Verfahrens wird dann noch bevorzugter durchgeführt, wenn der Innenraum **I_{KM}** mindestens so weit mit **L₃** beladen ist und der Innenraum **I_{KK}** mit **L₂** mindestens so weit beladen ist, dass **L₃** und **L₂,** die von der Trennwand **W** umfasste Oberfläche **O_{FΔ}** der alkalikationenleitenden Festelektrolytkeramik F direkt kontaktieren. Dies ist bevorzugt, da dadurch die durch die Behandlung in Schritt (ii) erhaltene Oberfläche **O_{FΔ}** innerhalb beider Oberflächen **O_{A/MK}** und **O_{KK}** am Elektrolyseprozess teilnimmt und die vorteilhaften Eigenschaften der alkalikationenleitenden Festelektrolytkeramik F, die sich in einer Erhöhung der Leitfähigkeit und dadurch eine Zunahme der Stromstärke bei gleicher Spannung niederschlagen, besonders positiv auswirken.

Die Tatsache, dass in Schritt (β3) ein Ladungstransport zwischen **E_{A}** und **E_{K}** stattfindet, impliziert, dass **I_{KK}, I_{KM}** und **I_{KA}** gleichzeitig mit **L₂** bzw. **L₃** so beladen sind, dass sie die Elektroden **E_{A}** und **E_{K}** soweit bedecken, dass der Stromkreislauf geschlossen ist.

Das ist insbesondere dann der Fall, wenn kontinuierlich ein Flüssigkeitsstrom von **L₃** durch **I_{KM}, V_{AM}** und **I_{KA}** und ein Flüssigkeitsstrom von **L₂** durch **I_{KK}** geleitet wird und der Flüssigkeitsstrom von **L₃** die Elektrode **E_{A}** und der Flüssigkeitsstrom von **L₂** die Elektrode **E_{K}** mindestens teilweise, bevorzugt vollständig bedeckt.

In einer weiteren bevorzugten Ausführungsform wird das Verfahren kontinuierlich durchgeführt, also Schritt (β1) und Schritt (β2) kontinuierlich durchgeführt und dabei gemäß Schritt (β3) Spannung angelegt.

Nach Durchführung des Schrittes (β3) wird am Ablauf **A_{KK}** die Lösung **L₁** erhalten, wobei die Konzentration von XOR in **L₁** höher ist als in **L₂.** Wenn **L₂** schon XOR umfasste, ist die Konzentration von XOR in **L₁** bevorzugt um das 1.01 bis 2.2-fache, bevorzugter um das 1.04 bis 1.8-fache, noch bevorzugter um das 1.077 bis 1.4-fache, noch mehr bevorzugter um das 1.077 bis 1.08-fache höher als in **L₂,** am bevorzugtesten um das 1.077-fache höher als in **L₂,** wobei noch bevorzugter dabei der Massenanteil von XOR in **L₁** und in **L₂** im Bereich 10 bis 20 Gew.-%, noch mehr bevorzugter 13 bis 14 Gew.-% liegt.

Am Ablauf **A_{KA}** wird eine wässrige Lösung **L₄** von **S** erhalten, wobei die Konzentration von S in **L₄** geringer ist als in **L**₃.

Die Konzentration des Kations X in der wässrigen Lösung **L₃** liegt bevorzugt im Bereich 3.5 bis 5 mol/l, bevorzugter 4 mol/l. Die Konzentration des Kations X in der wässrigen Lösung **L₄** ist bevorzugter 0.5 mol/l geringer als jene der jeweils eingesetzten wässrigen Lösung **L₃.**

Insbesondere werden die Schritte (β1) bis (β3) des Verfahrens bei einer Temperatur von 20 °C bis 70 °C, bevorzugt 35 °C bis 65 °C, bevorzugter 35 °C bis 60 °C, noch bevorzugter 35 °C bis 50 °C und einem Druck von 0.5 bar bis 1.5 bar, bevorzugt 0.9 bar bis 1.1 bar, bevorzugter 1.0 bar durchgeführt.

Bei der Durchführung der Schritte (β1) bis (β3) des Verfahrens entsteht im Innenraum **I_{KK}** der Kathodenkammer **K_{K}** typischerweise Wasserstoff, der über den Ablauf **A_{KK}** aus der Zelle zusammen mit der Lösung **L₁** abgeführt werden kann. Die Mischung aus Wasserstoff und Lösung **L₁** kann dann in einer besonderen Ausführungsform der vorliegenden Erfindung nach dem Fachmann bekannten Verfahren aufgetrennt werden. Im Innenraum **I_{KA}** der Anodenkammer **K_{A},** wenn es sich bei der eingesetzten Alkalimetallverbindung um ein Halogenid, insbesondere Chlorid handelt, kann Chlor oder ein anderes Halogengas entstehen, welches über den Ablauf **A_{KK}** aus der Zelle zusammen mit der Lösung **L₄** abgeführt werden kann. Daneben kann auch Sauerstoff oder/und Kohlendioxid entstehen, was ebenso abgeführt werden kann. Die Mischung aus Chlor, Sauerstoff und/oder CO₂ und Lösung **L₄** kann dann in einer besonderen Ausführungsform der vorliegenden Erfindung nach dem Fachmann bekannten Verfahren aufgetrennt werden. Genauso kann dann nach Abtrennung der Gase Chlor, Sauerstoff und/oder CO₂ von der Lösung **L₄** diese nach dem Fachmann bekannten Verfahren voneinander abgetrennt werden.

### 4.4.2.4 Zusätzliche Vorteile der Schritte (β1) bis (β3)

Diese Durchführung der Schritte (β1) bis (β3) bringen noch weitere überraschende Vorteile, die im Lichte des Standes der Technik nicht zu erwarten waren. Durch die Schritte (β1) bis (β3) des erfindungsgemäßen Verfahrens wird der säurelabile Feststoffelektrolyt vor Korrosion geschützt, ohne dass dabei wie im Stand der Technik Alkoholatlösung aus dem Kathodenraum als Pufferlösung geopfert werden muss. Damit sind diese Verfahrensschritte effizienter als die in WO 2008/076327 A1 beschriebene Vorgehensweise, in der die Produktlösung für die Mittelkammer verwendet wird, was den Gesamtumsatz schmälert.

### 5. Beispiele

### 5.1 Vergleichsbeispiel 1

Natriummethylat (NM) wurde über einen kathodischen Prozess hergestellt, wobei in der Anodenkammer 20 Gew.-%-ige NaCl-Lösung (in Wasser) und in der Kathodenkammer 10 Gew.-%-ige methanolische NM-Lösung zugeführt werden. Dabei bestand die Elektrolysezelle aus drei Kammern, wie in Abbildung 3A gezeigt.

Die Verbindung zwischen Mittel- und Anodenkammer wurde durch einen Schlauch, der am Boden der Elektrolysezelle angebracht war, hergestellt. Die Anodenkammer und mittlere Kammer waren durch eine 33 cm² Kationenaustauschermembran (Asahi Kasei, Sulfonsäuregruppen auf Polymer) getrennt. Kathoden und Mittelkammer waren durch eine Keramik vom Typ NaSICON mit einer Fläche von 33 cm² getrennt. Die Keramik hatte eine chemische Zusammensetzung der Formel Na_{3.4}Zr_{2.0}Si_{2.4}P_{0.6}O₁₂.

Die im Vergleichsbeispiel 1 verwendete NaSICON-Keramik wurde vor Anordnung in der Zelle zusammen mit einer weiteren, gleich dimensionierten, Keramik aus demselben Block geschnitten.

Der Anolyt wurde durch die mittlere Kammer in die Anodenkammer überführt. Die Durchflussrate des Anolyten betrug 1 l/h, jene des Katholyten betrug 1 l/h. Die Temperatur betrug 60 °C.

Die Spannung wurde in einem Bereich von 0 bis 8 V verändert und die Stromstärke dabei aufgezeichnet.

Es wurde außerdem beobachtet, dass sich in der Mittelkammer über längere Zeit ein pH-Gradient ausbildete, was auf die Wanderung der Ionen zu den Elektroden im Zuge der Elektrolyse und die Ausbreitung der an der Anode in Folgereaktionen gebildeten Protonen zurückzuführen ist. Diese lokale Erhöhung des pH-Wertes ist unerwünscht, da er den Festelektrolyten angreifen kann und gerade bei sehr langen Laufzeiten zur Korrosion und Bruch des Festelektrolyten führen kann.

### 5.2 Vergleichsbeispiel 2

Das Vergleichsbeispiel 1 wird mit einer Zweikammerzelle umfassend nur eine Anoden- und eine Kathodenkammer, wobei die Anodenkammer durch die Keramik vom Typ NaSICON von der Kathodenkammer getrennt war, wiederholt. Die Anordnung entspricht der in Abbildung 2 A gezeigten. Somit enthält diese Elektrolysezelle keine Mittelkammer.

Dies schlägt sich in einer noch schnelleren Korrosion der Keramik im Vergleich zum Vergleichsbeispiel 1 nieder, was zu einem schnelleren Anstieg der Spannungskurve führt, wenn die Elektrolyse bei konstanter Stromstärke über eine definierte Zeit betrieben werden soll.

### 5.3 Erfindungsgemäßes Beispiel 1

Vergleichsbeispiel 1 wird wiederholt.

Dazu wird die andere NaSICON-Keramik, die aus demselben Block wie die in Vergleichsbeispiel 1 verwendete geschnitten wird, einem Sputtering-Verfahren wie folgt unterzogen:
Die NaSICON Keramik wird zunächst in die Vakuumkammer des Sputter-Geräts als Target vor der Kathode eingebracht. Anschließend wird der Druck in der Kammer mithilfe einer Kombination aus Rotationspumpe und Turbopumpe auf 10⁻⁶ mbar gesenkt und ein leichter Zustrom von Argon so eingestellt, dass der Druck in der Kammer 10⁻² mbar beträgt. Zur Erzeugung des Plasmas wird nun eine Wechselspannung von 2 kV zwischen Anode und Kathode angelegt. Die Frequenz der Wechselspannung beträgt 13.56 MHz, um den Widerstand der nicht-leitenden Keramik so weit zu senken, dass ein Plasma entstehen kann. Gleichzeitig können bei dieser Frequenz die Elektronen dem angelegten Feld noch folgen, Ionen hingegen sind zu träge, um dem rasch wechselnden Feld zu folgen. Die im Plasma entstehenden Ar⁺-Ionen werden durch das elektrische Feld in Richtung der Kathode beschleunigt, wo sie auf die NaSICON-Keramik treffen und einzelne Bestandteile aus der Oberfläche herausschlagen. Der Sputterstrom beträgt 40 mA.

Die massenbezogene spezifische Oberfläche der NaSICON-Keramik vergrößert sich dabei um den Faktor ∼ 20.

Danach wird das Elektrolyseverfahren gemäß Vergleichsbeispiel 1 wiederholt, wobei die Oberflächen, die sich an der Keramik ausbilden, die Innenräume der Kathoden- und Mittelkammer kontaktieren.

Es wird festgestellt, dass bei gleicher Stromstärke wie in Vergleichsbeispiel 1 über die Dauer der Elektrolyse eine signifikant geringere Spannung angelegt werden musste.

### 5.4 Erfindungsgemäßes Beispiel 2

Vergleichsbeispiel 2 wird wiederholt, wobei eine Elektrolysezelle verwendet wird, in der die entsprechend dem erfindungsgemäßen Beispiel 1 behandelte Festelektrolytkeramik eingesetzt wird. Auch hier ist eine gegenüber dem Vergleichsbeispiel 2 signifikant verringerte Spannung bei gleicher Stromstärke nötig.

### 5.5 Ergebnis

Durch die Vorbehandlung (Sputtering) der NaSICON-Keramik und die Exposition der gesputterten Oberflächen an den Innenräumen der Anodenkammer bzw. Mittelkammer und der Kathodenkammer erhöht sich überraschend die Leitfähigkeit des Festelektrolyten.

Durch die Verwendung der Dreikammerzelle im erfindungsgemäßen Verfahren wird außerdem die Korrosion des Festelektrolyten verhindert, wobei gleichzeitig kein Alkalimetallalkoholatprodukt für die Mittelkammer geopfert werden muss und die Spannung konstant gehalten wird. Diese Vorteile, die schon aus dem Vergleich der beiden Vergleichsbeispiele 1 und 2 ersichtlich sind, unterstreichen den überraschenden Effekt des Einsatzes der Elektrolysezelle umfassend mindestens eine Mittelkammer in dem erfindungsgemäßen Verfahren.

**6. Referenzzeichen in den Abbildungen**

| **Komponente** | **Abkürzung** | **Bezugszeichen in Abbildungen** |
|---|---|---|
| Elektrolysezelle | **E** | <1> |
| Anodenkammer | **K_{A}** | <11> |
| Zulauf | **Z_{KA}** | <110> |
| Ablauf | **A_{KA}** | <111> |
| Innenraum | **I_{KA}** | <112> |
| anodische Elektrode | **E_{A}** | <113> |
| Kathodenkammer | **K_{K}** | <12> |
| Zulauf | **Z_{KK}** | <120> |
| Ablauf | **A_{KK}** | <121> |
| Innenraum | **I_{KK}** | <122> |
| kathodische Elektrode | **E_{K}** | <123> |
| Mittelkammer | **K_{M}** | <13> |
| Zulauf | **Z_{KM}** | <130> |
| Ablauf | **A_{KM}** | <131> |
| Innenraum | **I_{KM}** | <132> |
| Diffusionsbarriere | **D** | <14> |
| Verbindung | **V_{AM}** | <15> |
| Trennwand | **W** | <16> |
| Festelektrolytkeramik nach dem Schritt (ii) | **F** | <18> |
| abgestäubte Teilchen der Festelektrolytkeramik F | | <185> |
| Oberfläche von **F** | **O_{F}** | <180> |
| Teilbereich von **O_{F},** der in der Elektrolysezelle E den Innenraum **I_{KM}** der Mittelkammer **K**_{M} bzw. den Innenraum **I_{KA}** der Anodenkammer **K_{A}** direkt kontaktiert | **O_{A/MK}** | <181> |
| Teilbereich von **O_{F},** der in der Elektrolysezelle **E** den Innenraum **I_{KK}** der Kathodenkammer **K_{K}** direkt kontaktiert | **O_{KK}** | <182> |
| Teilbereich von **O_{F},** der sich durch Sputtern in Schritt (ii) des erfindungsgemäßen Verfahrens ausbildet; durch diesen Teilbereich unterscheidet sich **O_{F}** von **O_{F'}** | **O_{FΔ}** | <183> |
| Festelektrolytkeramik vor dem Schritt (ii) | **F'** | <19> |
| Oberfläche von **F'** | **O_{F'}** | <190> |
| Teilbereich von **O_{F'}** | | <191> |
| Teilbereich von **O_{F'}** | | <192> |
| Alkalimetallalkoholats XOR im Alkohol ROH | **L₁** | <21> |
| Lösung umfassend den Alkohol ROH | **L₂** | <22> |
| neutrale oder alkalische, wässrige Lösung eines Salzes **S** umfassend X als Kation | **L₃** | <23> |
| wässrige Lösung von S, wobei [**S**]**_{L4}** < [**S**]**_{L3}.** | **L₄** | <24> |
| Edelgaskationen | **N⁺** | <30> |
| Substratfolie (z.B. Titan) | | <40> |
| Außenwand | **W_{A}** | <80> |
| Prozesskammer für Sputtern | | <90> |

## Patentansprüche

1. Verfahren zur Herstellung einer Lösung **L₁** <21> eines Alkalimetallalkoholats XOR im Alkohol ROH in einer Elektrolysezelle **E** <1>, wobei X ein Alkalimetallkation ist und R ein Alkylrest mit 1 bis 4 Kohlenstoffatomen ist,
umfassend die folgenden Schritte:
(i) eine alkalikationenleitende Festelektrolytkeramik **F'** <19> mit der Oberfläche **O_{F'}** <190> wird bereitgestellt;
(ii) ein Teil der alkalikationenleitenden Festelektrolytkeramik **F'** <19> wird durch Sputtern mit Edelgaskationen **N⁺** <30> abgetragen, wodurch eine alkalikationenleitende Festelektrolytkeramik **F** <18> mit der Oberfläche **O_{F}** <180> erhalten wird, wobei sich die Oberfläche **O_{F}** <180> in mindestens einem Teilbereich **O_{FΔ}** <183> von der Oberfläche **O_{F'}** <190> unterscheidet,
und wobei die Oberfläche **O_{F}** <180> die Oberflächen **O_{A/MK}** <181> und **O_{KK}** <182> umfasst, wobei **O_{A/MK}** <181> und/oder **O_{KK}** <182> mindestens einen Teil von **O_{FΔ}** <183> umfassen,
(iii) und die alkalikationenleitende Festelektrolytkeramik F <18> in einer Elektrolysezelle **E** <1>, die mindestens eine Anodenkammer **K_{A}** <11>, mindestens eine Kathodenkammer **K_{K}** <12> und gegebenenfalls mindestens eine dazwischen liegende Mittelkammer **K**_{M} <13> umfasst,
wobei die mindestens eine Anodenkammer **K_{A}** <11>
- mindestens einen Zulauf **Z_{KA}** <110>,
- mindestens einen Ablauf **A_{KA}** <111>,
- und einen Innenraum **I_{KA}** <112> mit einer anodischen Elektrode **E_{A}** <113> umfasst,
wobei die mindestens eine Kathodenkammer **K_{K}** <12>
- mindestens einen Zulauf **Z_{KK}** <120>,
- mindestens einen Ablauf **A_{KK}** <121>,
- und einen Innenraum **I_{KK}** <122> mit einer kathodischen Elektrode **E_{K}** <123> umfasst,
und wobei in den Fällen, in denen die Elektrolysezelle **E** <1> mindestens eine Mittelkammer **K**_{M} <13> umfasst, diese
- mindestens einen Zulauf **Z_{KM}** <130>,
- mindestens einen Ablauf **A_{KM}** <131>,
- und einen Innenraum **I_{KM}** <132>
umfasst,
und wobei dann **I_{KA}** <112> und **I_{KM}** <132> durch eine Diffusionsbarriere **D** <14> voneinander abgetrennt sind, und **A_{KM}** <131> durch eine Verbindung **V_{AM}** <15> mit dem Zulauf **Z_{KA}** <110> verbunden ist, so dass durch die Verbindung **V_{AM}** <15> Flüssigkeit aus **I_{KM}** <132> in **I_{KA}** <112> geleitet werden kann,
so angeordnet wird, dass
in den Fällen, in denen die Elektrolysezelle **E** <1> keine Mittelkammer **K_{M}** <13> umfasst, **I_{KA}** <112> und **I_{KK}** <122> durch eine Trennwand **W** <16> umfassend die alkalikationenleitende Festelektrolytkeramik **F** <18> voneinander abgetrennt sind, wobei **F** <18> den Innenraum **I_{KK}** <122> über die Oberfläche **O_{KK}** <182> und den Innenraum **I_{KA}** <112> über die Oberfläche **O_{A/MK}** <181> direkt kontaktiert,
in den Fällen, in denen die Elektrolysezelle **E** <1> mindestens eine Mittelkammer **K_{M}** <13> umfasst, **I_{KK}** <122> und **I_{KM}** <132> durch eine Trennwand **W** <16> umfassend die alkalikationenleitende Festelektrolytkeramik **F** <18> voneinander abgetrennt sind, wobei **F** <18> den Innenraum **I_{KK}** <122> über die Oberfläche **O_{KK}** <182> und den Innenraum **I_{KM}** <132> über die Oberfläche **O_{A/MK}** <181> direkt kontaktiert,
(iv-a) und dann in den Fällen, in denen die Elektrolysezelle **E** <1> keine Mittelkammer **K**_{M} <13> umfasst, die folgenden, gleichzeitig ablaufenden Schritte (α1), (α2), (α3) durchgeführt werden:
(α1) eine Lösung **L₂** <22> umfassend den Alkohol ROH wird durch **I_{KK}** <122> geleitet, wobei, wenn **O_{KK}** <182> mindestens einen Teil von **O_{FΔ}** <183> umfasst, die Lösung **L₂** <22> die Oberfläche **O_{FΔ}** <183> direkt kontaktiert,
(a2) eine neutrale oder alkalische, wässrige Lösung **L₃** <23> eines Salzes **S** umfassend X als Kation wird durch **I_{KA}** <112> geleitet, wobei, wenn **O_{A/MK}** <181> mindestens einen Teil von **O_{FΔ}** <183> umfasst, die Lösung **L₃** <23> die Oberfläche **O_{FΔ}** <183> direkt kontaktiert,
(a3) zwischen **E_{A}** <113> und **E_{K}** <123> wird Spannung angelegt,
(iv-β) und in den Fällen, in denen die Elektrolysezelle **E** <1> mindestens eine Mittelkammer **K_{M}** <13> umfasst, die folgenden, gleichzeitig ablaufenden Schritte (β1), (β2), (β3) durchgeführt werden:
(β1) eine Lösung **L₂** <22> umfassend den Alkohol ROH wird durch **I_{KK}** <122> geleitet, wobei, wenn **O_{KK}** <182> mindestens einen Teil von **O_{FΔ}** <183> umfasst, die Lösung **L₂** <22> die Oberfläche **O_{FΔ}** <183> direkt kontaktiert,
(β2) eine neutrale oder alkalische, wässrige Lösung **L₃** <23> eines Salzes **S** umfassend X als Kation wird durch **I_{KM}** <132>, dann über **V_{AM}** <15>, dann durch **I_{KA}** <112> geleitet, wobei, wenn **O_{A/MK}** <181> mindestens einen Teil von **O_{FΔ}** <183> umfasst, die Lösung **L₃** <23> die Oberfläche **O_{FΔ}** <183> direkt kontaktiert,
(β3) zwischen **E_{A}** <113> und **E_{K}** <123> wird Spannung angelegt,
wodurch am Ablauf **A_{KK}** <121> die Lösung **L₁** <21> erhalten wird, wobei die Konzentration von XOR in **L₁** <21> höher ist als in **L₂** <22>,
und wodurch am Ablauf **A_{KA}** <111> eine wässrige Lösung **L₄** <24> von **S** erhalten wird, wobei die Konzentration von **S** in **L₄** <24> geringer ist als in **L₃** <23>.

2. Verfahren nach Anspruch 1, wobei gilt: **S_{MF'}** < **S_{MF},** wobei S_{MF'} die massenbezogene spezifische Oberfläche **S_{M}** der alkalikationenleitenden Festelektrolytkeramik **F'** vor Durchführung des Schrittes (ii) ist und wobei **S_{MF}** die massenbezogene spezifische Oberfläche **S_{M}** der alkalikationenleitenden Festelektrolytkeramik **F** nach Durchführung des Schrittes (ii) ist.

3. Verfahren nach Anspruch 2, wobei der Quotient **S_{MF}/S_{MF'}** ≥ 1.01.

4. Verfahren nach einem der Ansprüche 1 bis 3, wobei mindestens 1 % der Oberfläche **O_{A/MK}** <181> von **O_{FΔ}** <183> gebildet werden und/oder mindestens 1 % der Oberfläche **O_{KK}** <182> von **O_{FΔ}** <183> gebildet werden.

5. Verfahren nach einem der Ansprüche 1 bis 4, wobei die alkalikationenleitende Festelektrolytkeramik F' <19> eine Struktur der Formel:
M^{I}_{1+2w+x-y+z} M^{II}_{w} M^{III}ₓ Zr^{IV}_{2-w-x-y} M^{V}_{y} (SiO₄)_{z} (PO₄)_{3-z}
aufweist,
wobei M^{I} ausgewählt aus Na⁺, Li⁺ ist,
M^{II} ein zweiwertiges Metallkation ist,
M^{III} ein dreiwertiges Metallkation ist,
M^{V} ein fünfwertiges Metallkation ist,
die römischen Indizes I, II, III, IV, V die Oxidationszahlen angeben, in der die jeweiligen Metallkationen vorliegen,
und w, x, y, z reelle Zahlen sind, wobei gilt, dass 0 ≤ x < 2, 0 ≤ y < 2, 0 ≤ w < 2, 0 ≤ z < 3, und wobei w, x, y, z so gewählt werden, dass 1 + 2w + x - y + z ≥ 0 und 2 - w - x - y ≥ 0 gilt.

6. Verfahren nach einem der Ansprüche 1 bis 5, wobei X aus der Gruppe bestehend aus Li⁺, Na⁺, K⁺ ausgewählt ist.

7. Verfahren nach Anspruch 6, wobei X = Na⁺ ist.

8. Verfahren nach einem der Ansprüche 1 bis 7, wobei S ein Halogenid, Sulfat, Sulfit, Nitrat, Hydrogencarbonat oder Carbonat von X ist.

9. Verfahren nach Anspruch 8, wobei **S** ein Chlorid von X ist.

10. Verfahren nach einem der Ansprüche 1 bis 9, wobei R aus der Gruppe bestehend aus Methyl, Ethyl ausgewählt ist.

11. Verfahren nach Anspruch 10, wobei R = Methyl ist.

12. Verfahren nach einem der Ansprüche 1 bis 11, wobei die Elektrolysezelle E <1> keine Mittelkammer **K_{M}** <13> umfasst.

13. Verfahren nach einem der Ansprüche 1 bis 11, wobei die Elektrolysezelle **E** <1> mindestens eine Mittelkammer **K_{M}** <13> umfasst.

14. Verfahren nach Anspruch 13, wobei die Verbindung **V_{AM}** <15> innerhalb der Elektrolysezelle **E** <1> ausgebildet ist.

15. Verfahren nach Anspruch 13, wobei die Verbindung **V_{AM}** <15> außerhalb der Elektrolysezelle **E** <1> ausgebildet ist.
